# EUROPEAN PATENT APPLICATION

(11) **EP 4 478 784 A1**
(43) Date of publication of application: **18.12.2024**
(21) Application number: 23752801.3
(22) Date of filing: 03.02.2023
(51) Int. Cl.: H04W 36/30, H04W 24/10, H04W 88/08, H04W 92/16

(54) **COMMUNICATION SYSTEM AND BASE STATION**

(30) Priority: 09.02.2022 JP 2022018776
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2023/003646
(87) International publication number: WO 2023/153336

(57) **Abstract**

A communication system that achieves reduction in delay time or the like at the time of mobility includes: a base station that is applied to a fifth-generation wireless access system; and a communication terminal that connects to the base station. When a cell that is a connection destination of a communication terminal in communication via any one of a plurality of cells constituted by the base station is changed, the base station transmits, to the communication terminal, setting information for measuring communication quality in a physical layer of the cell, the communication terminal measures the communication quality in another cell different from a cell being connected based on the setting information received from the base station, and transmits a measurement result to the base station, and the base station determines a cell to be a new connection destination of the communication terminal based on the measurement result.

## Description

### Field

The present disclosure relates to wireless communication technology.

### Background

In the 3rd Generation Partnership Project (3GPP), which is an association for standardizing mobile communication systems, fifth-generation (hereinafter may be referred to as "5G") wireless access systems have been developed as a successor to Long Term Evolution (LTE) and Long Term Evolution Advanced (LTE-A) (see Non Patent Literature 1), which is one of fourth-generation wireless access systems (for example, Non Patent Literature 2). Technology for 5G wireless sections is referred to as "New Radio Access Technology" ("New Radio" is abbreviated as "NR"). NR systems have been developed based on the LTE systems and the LTE-A systems.

For example, in Europe, requirements for 5G have been compiled by an association called METIS (see Non Patent Literature 3). The requirements for 5G wireless access systems include 1000 times larger system capacity, 100 times higher data transmission rate, 1/5 lower data processing latency, and 100 times more communication terminals simultaneously connected than LTE systems, so as to achieve further reduction in power consumption and reduction in device cost (see Non Patent Literature 3).

In order to satisfy these requirements, 3GPP has devised 5G standards (see Non Patent Literatures 4 to 23).

As NR access schemes, Orthogonal Frequency Division Multiplexing (OFDM) is used for downlink, and OFDM and Discrete Fourier Transform-spread-OFDM (DFT-s-OFDM) is used for uplink. In addition, similarly to LTE and LTE-A, 5G systems do not include circuit switching and include only a packet communication scheme.

NR allows for the use of higher frequencies than LTE to improve transmission speed and reduce processing delay.

NR, in which higher frequencies than LTE may be used, ensures cell coverage by forming a narrow beam-shaped transmission/reception range (beamforming) and changing the beam direction (beamsweeping).

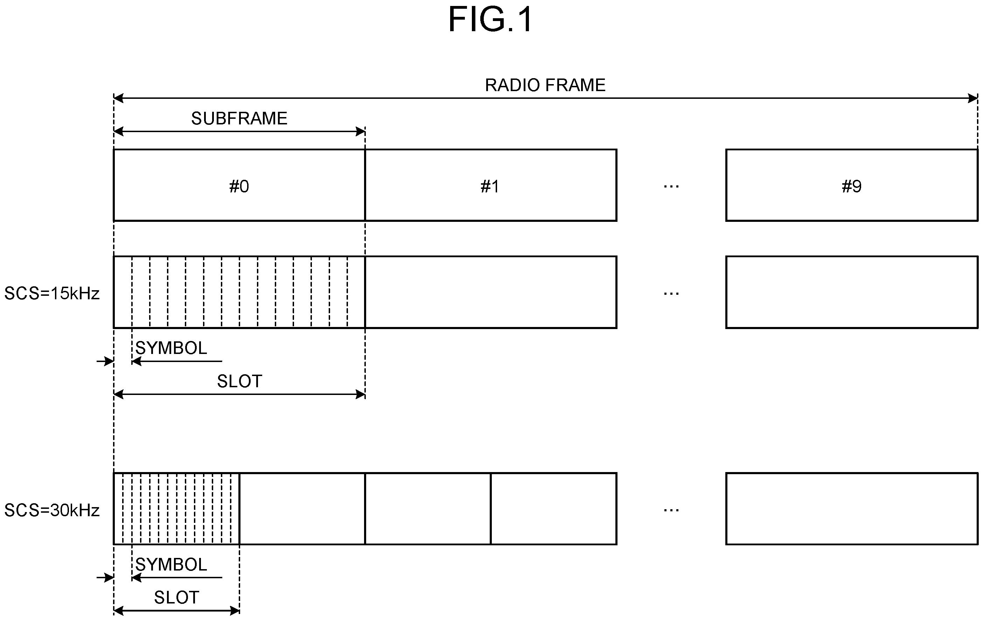

The 3GPP agreements regarding frame configurations for NR systems described in Non Patent Literature 1 (Chapter 5) will be described with reference to FIG. 1. FIG. 1 is an explanatory diagram illustrating a configuration of a radio frame for use in an NR-based communication system. In FIG. 1, one radio frame is 10 ms long. A radio frame is divided into 10 equally sized subframes. In the frame configuration of NR, one or more numerologies, that is, one or more subcarrier spacings (SCS), are supported. Regardless of subcarrier spacing in NR, one subframe is 1 ms long, and one slot is composed of 14 symbols. In addition, the number of slots included in one subframe is one in a subcarrier spacing of 15 kHz, and the number of slots in another subcarrier spacing increases in proportion to subcarrier spacing (see Non Patent Literature 11 (3GPP TS38.211)).

The 3GPP agreements regarding channel configurations for NR systems are described in Non Patent Literature 2 (Chapter 5) and Non Patent Literature 11.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be referred to as "mobile terminals" or "terminals"). The PBCH is transmitted together with a downlink synchronization signal.

The downlink synchronization signals in NR are classified as primary synchronization signals (P-SS) and secondary synchronization signals (S-SS). Synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.

The base station transmits the SS block of each beam in different beams within the duration of the SS burst. The SS block includes P-SS, S-SS, and PBCH.

Physical Downlink Control Channel (PDCCH) is a channel for downlink transmission from base stations to communication terminals. The PDCCH carries downlink control information (DCI). The DCI includes, for example, resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. In addition, the DCI may include an uplink scheduling grant. The DCI may include acknowledgement (Ack)/negative acknowledgement (Nack) as a response signal to uplink transmission. In addition, in order to flexibly switch between DL and UL in a slot, the DCI may include a slot configuration indication (SFI). The PDCCH or DCI is also called a L1/L2 control signal.

In NR, a time and frequency domain that is a candidate including the PDCCH is provided. This domain is referred to as a control resource set (CORESET). The communications terminal monitors the CORESET, and acquires the PDCCH.

Physical Downlink Shared Channel (PDSCH) is a channel for downlink transmission from base stations to communication terminals. Downlink shared channel (DL-SCH) and PCH, which are transport channels, are mapped to the PDSCH.

Physical Uplink Control Channel (PUCCH) is a channel for uplink transmission from communication terminals to base stations. The PUCCH carries uplink control information (UCI). The UCI includes Ack/Nack which is a response signal to the downlink transmission, channel state information (CSI), scheduling request (SR), and the like. The CSI includes rank indicator (RI), precoding matrix indicator (PMI), and channel quality indicator (CQI) report. The RI is rank information of a channel matrix in multiple input multiple output (MIMO). The PMI is information of a precoding weight matrix for use in MIMO. The CQI is quality information indicating the quality of received data or channel quality. The UCI may be carried by the PUSCH described below. The PUCCH or UCI is also called a L1/L2 control signal.

Physical Uplink Shared Channel (PUSCH) is a channel for uplink transmission from communication terminals to base stations. To the PUSCH, Uplink Shared Channel (UL-SCH) is mapped as one of the transport channels.

Physical Random Access Channel (PRACH) is a channel for uplink transmission from communication terminals to base stations. The PRACH carries a random access preamble.

Downlink reference signals (RS) are known as symbols for NR-based communication systems. The following four types of downlink reference signals are defined: Data demodulation reference signals (DM-RS) which are UE-specific reference signals, phase tracking reference signals (PT-RS), positioning reference signals (PRS), and channel state information reference signals (CSI-RS). The measurement of the physical layer of the communication terminal includes reference signal received power (RSRP) measurement and reference signal received quality (RSRQ) measurement.

Similarly, uplink reference signals are known as symbols for NR-based communication systems. The following three types of uplink reference signals are defined: Demodulation reference signals (DM-RS), phase tracking reference signals (PT-RS), and sounding reference signals (SRS) .

The transport channels described in Non Patent Literature 2 (Chapter 5) will be described. Among the downlink transport channels, Broadcast Channel (BCH) is broadcast to the entire coverage of the base station (cell). The BCH is mapped to Physical Broadcast Channel (PBCH).

Retransmission control by HARQ is applied to Downlink Shared Channel (DL-SCH). The DL-SCH can be broadcast to the entire coverage of the base station (cell). The DL-SCH supports dynamic or semi-static resource allocation. Semi-static resource allocation is also called semi-persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Retransmission control by HARQ is applied to Uplink Shared Channel (UL-SCH) among the uplink transport channels. The UL-SCH supports dynamic or semi-static resource allocation. Semi-static resource allocation is also called configured grant. The UL-SCH is mapped to Physical Uplink Shared Channel (PUSCH).

Random Access Channel (RACH) is limited to control information. The RACH has a risk of collision. The RACH is mapped to Physical Random Access Channel (PRACH) .

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

Another example of a retransmission method will be described. In a case where a CRC error occurs on the reception side, a retransmission request is made from the reception side to the transmission side. The retransmission request is made by toggling of a new data indicator (NDI). Upon receiving the retransmission request, the transmission side retransmits the data. In a case where a CRC error does not occur on the reception side, the retransmission request is not made. In a case where the transmission side does not receive the retransmission request for a predetermined period of time, it is considered that a CRC error has not occurred on the reception side.

The logical channels described in Non Patent Literature 1 (Chapter 6) will be described. Broadcast Control Channel (BCCH) is a downlink channel for broadcasting system control information. The BCCH, which is a logical channel, is mapped to a transport channel: broadcast channel (BCH) or downlink shared channel (DL-SCH) .

Paging Control Channel (PCCH) is a downlink channel for transmitting a change in paging information and system information. The PCCH, which is a logical channel, is mapped to Paging Channel (PCH), which is a transport channel.

Common Control Channel (CCCH) is a channel for transmitting control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Dedicated Control Channel (DCCH) is a channel for transmitting dedicated control information between communication terminals and the network on a one-to-one basis. The DCCH is used when a communication terminal has an RRC connection with the network. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with communication terminals for transmitting user information. The DTCH exists in both uplink and downlink. The DTCH is mapped to the uplink shared channel (UL-SCH) in uplink, and is mapped to the downlink shared channel (DL-SCH) in downlink.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas.

NR supports calling of a communication terminal in a range the unit of which is an area smaller than the tracking area. This range is referred to as a RAN notification area (RNA). Paging of the communication terminal in the RRC_INACTIVE state, which will be described later, is performed in this range.

NR employs Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). Depending on UE capabilities, a Secondary Cell (SCell) can be configured to form a set of serving cells together with the PCell. A set of serving cells consisting of one PCell and one or more SCells is configured for one UE.

3GPP has Dual Connectivity (abbreviated as DC), in which a UE is connected to and communicates with two base stations in order to further increase the communication capacity. DC is described in Non Patent Literatures 1 and 22.

One of the base stations that perform dual connectivity (DC) may be referred to as a "master base station (MN)", and the other may be referred to as a "secondary base station (SN)". The serving cells configured by the master base station may be collectively referred to as a master cell group (MCG), and the serving cells configured by the secondary base station may be collectively referred to as a secondary cell group (SCG). In the DC, a primary cell in the MCG or the SCG is referred to as a special cell (SpCell or SPCell). A special cell in the MCG is referred to as a PCell, and a special cell in the SCG is referred to as a primary SCG cell (PSCell).

In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.

In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 2, and 26 to 28). In SL communication, communication is performed between terminals. Examples of services using SL communication include vehicle-to-everything (V2X) services and proximity-based services. In SL communication, not only direct communication between terminals but also communication between UE and NW via a relay has been proposed (See Non Patent Literatures 26 and 28).

Physical channels for use in SL (see Non Patent Literatures 2 and 11) will be described. Physical Sidelink Broadcast Channel (PSBCH) carries information related to the system and synchronization and is transmitted from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Shared Channel (SL-SCH) supports broadcast transmission. The SL-SCH supports both UE autonomous resource selection and resource allocation scheduled by the base station. There is a collision risk in the UE autonomous resource selection, and there is no collision when the UE is allocated individual resources by the base station. The SL-SCH also supports dynamic link adaptation by changing transmission power, modulation, and coding. The SL-SCH is mapped to the physical channel PSSCH.

Logical channels for use in SL (see Non Patent Literature 2) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

In LTE, SL communication is applied only to broadcast. In NR, SL communication is designed to support unicast and groupcast in addition to broadcast (see Non Patent Literature 27 (3GPP TS23.287)).

Unicast communication and groupcast communication in SL support HARQ feedback (Ack/Nack), CSI reporting, and the like.

In addition, 3GPP has developed Integrated Access and Backhaul (IAB), in which both an access link that is a link between UE and a base station and a backhaul link that is a link between base stations are wirelessly performed (see Non Patent Literatures 2, 20, and 29).

3GPP has proposed several new technologies. For example, extension of mobility control technology in NR has been proposed (Non Patent Literature 30). Conventionally, control technology involving RRC (sometimes referred to as L3 mobility) is used for cell-level mobility, in other words, inter-cell (inter-cell) mobility. However, in order to reduce the delay time or the like at the time of mobility, it has been proposed that inter-cell mobility is performed by mobility control not involving RRC (sometimes referred to as L1/L2 mobility).

### Citation List

### Non Patent Literature

Non Patent Literature 1: 3GPP TS36.300 V16.7.0
Non Patent Literature 2: 3GPP TS38.300 V16.8.0
Non Patent Literature 3: "Scenarios, requirements and KPIs for 5G mobile and wireless system", ICT-317669-METIS/D1.1
Non Patent Literature 4: 3GPP TR23.799 V14.0.0
Non Patent Literature 5: 3GPP TR38.801 V14.0.0
Non Patent Literature 6: 3GPP TR38.802 V14.2.0
Non Patent Literature 7: 3GPP TR38.804 V14.0.0
Non Patent Literature 8: 3GPP TR38.912 V16.0.0
Non Patent Literature 9: 3GPP RP-172115
Non Patent Literature 10: 3GPP TS23.501 V17.3.0
Non Patent Literature 11: 3GPP TS38.211 V17.0.0
Non Patent Literature 12: 3GPP TS38.212 V17.0.0
Non Patent Literature 13: 3GPP TS38.213 V17.0.0
Non Patent Literature 14: 3GPP TS38.214 V17.0.0
Non Patent Literature 15: 3GPP TS38.321 V16.7.0
Non Patent Literature 16: 3GPP TS38.322 V16.2.0
Non Patent Literature 17: 3GPP TS38.323 V16.6.0
Non Patent Literature 18: 3GPP TS37.324 V16.3.0
Non Patent Literature 19: 3GPP TS38.331 V16.7.0
Non Patent Literature 20: 3GPP TS38.401 V16.8.0
Non Patent Literature 21: 3GPP TS38.413 V16.8.0
Non Patent Literature 22: 3GPP TS37.340 V16.8.0
Non Patent Literature 23: 3GPP TS38.423 V16.8.0
Non Patent Literature 24: 3GPP TS38.305 V16.7.0
Non Patent Literature 25: 3GPP TS23.273 V17.3.0
Non Patent Literature 26: 3GPP TR23.703 V12.0.0
Non Patent Literature 27: 3GPP TS23.287 V17.2.0
Non Patent Literature 28: 3GPP TS23.303 V17.0.0
Non Patent Literature 29: 3GPP TS38.340 V16.5.0
Non Patent Literature 30: 3GPP RP-212710

### Summary of Invention

### Problem to be solved by the Invention

In 5G wireless access systems, communication for a wide variety of services is performed. In order to enable such communication, for example, support of highspeed mobile terminals and support of a large number of transmission reception points (TRPs) and the like have also been developed. Such systems are required to reduce the delay time, overhead, and interruption time in mobility control. In order to meet such a requirement, it has been proposed that inter-cell mobility control is performed by control technology not involving RRC (L1/L2 mobility) in 3GPP (Non Patent Literature 30). However, no specific method has been disclosed for executing inter-cell mobility control with L1/L2 mobility. This leads to a problem that inter-cell mobility control cannot be implemented by L1/L2 mobility, and the delay time or the like at the time of mobility cannot be reduced.

In view of the above problem, one of the objects of the present disclosure is to realize a communication system capable of reducing the delay time or the like at the time of mobility.

### Means to Solve the Problem

A communication system according to the present disclosure comprises: a base station to be applied to a fifth-generation wireless access system; and a communication terminal to connect to the base station, wherein when a cell that is a connection destination of a communication terminal in communication via any one of a plurality of cells constituted by the base station is changed, the base station transmits, to the communication terminal, setting information for measuring communication quality in a physical layer of the cell, the communication terminal measures the communication quality in another cell different from a cell being connected based on the setting information received from the base station, and transmits a measurement result to the base station, and the base station determines a cell to be a new connection destination of the communication terminal based on the measurement result.

### Effects of the Invention

According to the present disclosure, it is possible to realize a communication system capable of reducing the delay time or the like at the time of mobility.

Objects, features, aspects, and advantages of the present disclosure will become more apparent from the following detailed description and the accompanying drawings.

### Brief Description of Drawings

FIG. 1 is an explanatory diagram illustrating a configuration of a radio frame for use in an NR-based communication system.
FIG. 2 is a block diagram illustrating an overall configuration of an NR-based communication system 210 discussed in 3GPP.
FIG. 3 is a diagram illustrating a DC configuration with a base station connected to an NG core.
FIG. 4 is a block diagram illustrating a configuration of the mobile terminal 202 illustrated in FIG. 2.
FIG. 5 is a block diagram illustrating a configuration of the base station 213 illustrated in FIG. 2.
FIG. 6 is a block diagram illustrating a configuration of a 5GC unit.
FIG. 7 is a flowchart schematically illustrating the procedure from a cell search to an idle operation performed by a communication terminal (UE) in an NR-based communication system.
FIG. 8 is a diagram illustrating an exemplary configuration of a cell in the NR system.
FIG. 9 is a connection configuration diagram illustrating an exemplary connection configuration of terminals in the SL communication.
FIG. 10 is a connection configuration diagram illustrating an exemplary connection configuration of a base station supporting Integrated Access and Backhaul.
FIG. 11 is a conceptual diagram of inter-cell L1/L2 mobility.
FIG. 12 is a diagram illustrating the first half of a sequence indicating an example of an inter-cell L1/L2 mobility processing method in the DU according to the first embodiment.
FIG. 13 is a diagram illustrating the second half of a sequence indicating an example of an inter-cell L1/L2 mobility processing method in the DU according to the first embodiment.
FIG. 14 is a diagram illustrating the first half of a sequence indicating an example of an inter-cell L1/L2 mobility processing method including a cell change between different DUs according to the second embodiment.
FIG. 15 is a diagram illustrating the second half of a sequence indicating an example of an inter-cell L1/L2 mobility processing method including a cell change between different DUs according to the second embodiment.

### Description of Embodiments

### First Embodiment.

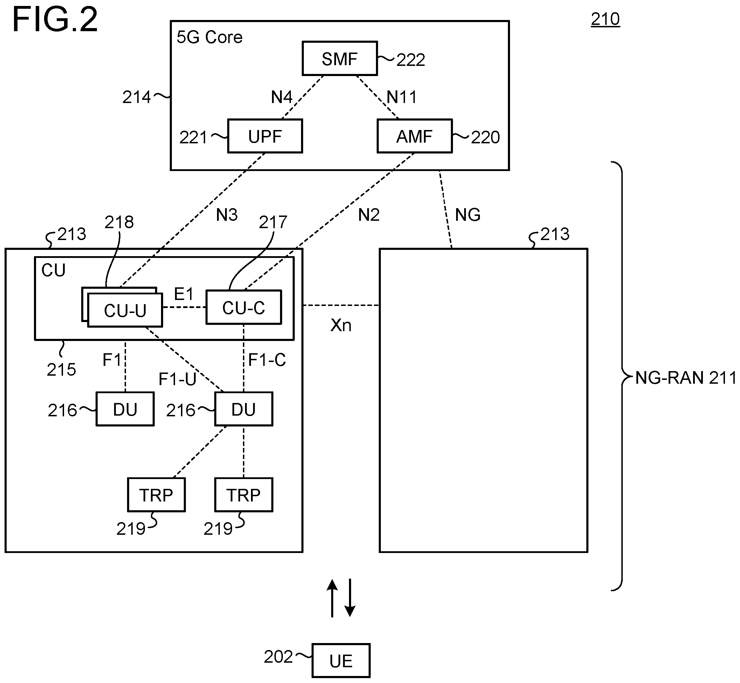

FIG. 2 is a block diagram illustrating an overall configuration of an NR-based communication system 210 discussed in 3GPP. Below is a description of FIG. 2. The wireless access network is referred to as a Next Generation Radio Access Network (NG-RAN) 211. A mobile terminal device (hereinafter referred to as a "mobile terminal or user equipment (UE)") 202 which is a communication terminal device can wirelessly communicate with a base station device (hereinafter referred to as an "NR base station (NG-RAN NodeB (gNB)") 213, and transmits and receives signals by wireless communication. The NG-RAN 211 includes one or more NR base stations 213.

Here, "communication terminal devices" include not only mobile terminal devices such as mobile phone terminal devices that can move but also non-moving devices such as sensors. In the following description, a "communication terminal device" may be simply referred to as a "communication terminal".

Access Stratum (AS) protocol is terminated between the UE 202 and the NG-RAN 211. As the AS control protocol, for example, Radio Resource Control (RRC), Service Data Adaptation Protocol (SDAP), Packet Data Convergence Protocol (PDCP), Radio Link Control (RLC), Medium Access Control (MAC), or Physical layer (PHY) is used. RRC is used in control plane (hereinafter may be referred to as C-plane), SDAP is used in user plane (hereinafter may be referred to as U-plane) and PDCP, MAC, RLC, and PHY are used in both C-plane and U-plane.

The control protocol "Radio Resource Control (RRC)" between the UE 202 and the NR base station 213 performs broadcast, paging, RRC connection management, and the like. The states of the NR base station 213 and the UE 202 in RRC are classified as RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed. In RRC_INACTIVE, the connection between a 5G core unit 214 and the NR base station 213 is maintained, and meanwhile system information (SI) broadcast, paging, cell re-selection, mobility, and the like are performed.

The gNB 213 is connected via an NG interface to the 5G core unit (hereinafter may be referred to as the "5GC unit") 214 including an Access and Mobility Management Function (AMF), a Session Management Function (SMF), a User Plane Function (UPF), or the like. Control information and/or user data is communicated between the gNB 213 and the 5GC unit 214. The NG interface is a generic term for the N2 interface between the gNB 213 and the AMF 220, the N3 interface between the gNB 213 and the UPF 221, the N11 interface between the AMF 220 and the SMF 222, and the N4 interface between the UPF 221 and the SMF 222. A plurality of 5GC units 214 may be connected to one gNB 213. Different gNBs 213 are connected by an Xn interface, and control information and/or user data is communicated between the gNBs 213.

The 5GC unit 214 is a higher-level device, specifically, a higher-level node, and performs control of connection between the NR base station 213 and the mobile terminal (UE) 202, distribution of a paging signal to one or more NR base stations (gNBs) 213 and/or LTE base stations (E-UTRAN NodeB: eNB), and the like. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The gNB 213 may configure one or more cells. In a case where one gNB 213 configures a plurality of cells, every single cell is configured to be able to communicate with the UE 202.

The gNB 213 may be divided into a central unit (hereinafter may be referred to as CU) 215 and a distributed unit (hereinafter may be referred to as DU) 216. One CU 215 is configured in the gNB 213. One or more DUs 216 are configured in the gNB 213. One DU 216 constitutes one or more cells. The CU 215 is connected to the DU 216 by an F1 interface, and control information and/or user data is communicated between the CU 215 and the DU 216. The F1 interface includes an F1-C interface and an F1-U interface. The CU 215 is responsible for the functions of the RRC, SDAP, and PDCP protocols, and the DU 216 is responsible for the functions of the RLC, MAC, and PHY protocols. One or more transmission reception points (TRPs) 219 may be connected to the DU 216. The TRP 219 transmits and receives wireless signals to and from the UE.

The CU 215 may be divided into a CU for C-plane (CU-C) 217 and a CU for U-plane (CU-U) 218. One CU-C 217 is configured in the CU 215. One or more CU-Us 218 are configured in the CU 215. The CU-C 217 is connected to the CU-U 218 by an E1 interface, and control information is communicated between the CU-C 217 and the CU-U 218. The CU-C 217 is connected to the DU 216 via the F1-C interface, and control information is communicated between the CU-C 217 and the DU 216. The CU-U 218 is connected to the DU 216 by the F1-U interface, and user data is communicated between the CU-U 218 and the DU 216.

In the 5G-based communication system, the Unified Data Management (UDM) function and the Policy Control Function (PCF) described in Non Patent Literature 10 (3GPP TS23.501) may be included. The UDM and/or the PCF may be included in the 5GC unit 214 in FIG. 214.

In the 5G-based communication system, the Location Management Function (LMF) described in Non Patent Literature 24 (3GPP TS38.305) may be provided. The LMF may be connected to the base station via the AMF as disclosed in Non Patent Literature 25 (3GPP TS23.273).

In the 5G-based communication system, the Non-3GPP Interworking Function (N3IWF) described in Non Patent Literature 10 (3GPP TS23.501) may be included. The N3IWF may terminate the Access Network (AN) with the UE in non-3GPP access with the UE.

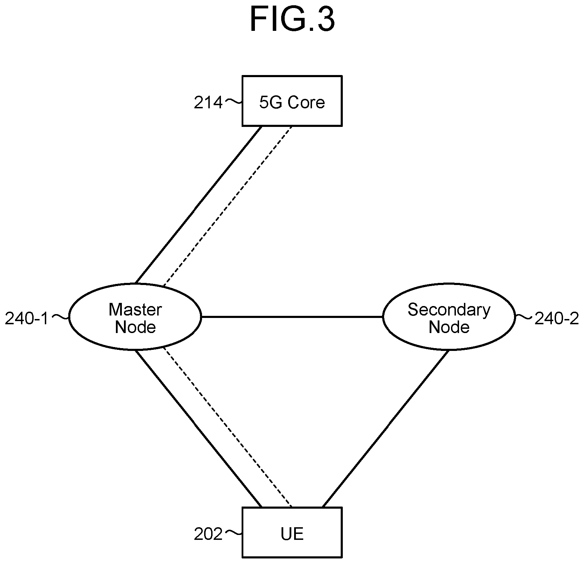

FIG. 3 is a diagram illustrating a dual connectivity (DC) configuration for connection to an NG core. In FIG. 3, a solid line indicates a U-Plane connection, and a broken line indicates a C-Plane connection. In FIG. 3, a master base station 240-1 may be a gNB or an eNB. In addition, a secondary base station 240-2 may be a gNB or an eNB. For example, in FIG. 3, a DC configuration in which the master base station 240-1 is a gNB and the secondary base station 240-2 is an eNB may be referred to as NG-EN-DC. Although FIG. 3 illustrates an example in which the U-Plane connection between the 5GC unit 214 and the secondary base station 240-2 is established via the master base station 240-1, the U-Plane connection may be directly established between the 5GC unit 214 and the secondary base station 240-2. Further, in FIG. 3, instead of the 5GC unit 214, an evolved packet core (EPC) which is a core network connected to the LTE system or the LTE-A system may be connected to the master base station 240-1. The U-Plane connection between the EPC and the secondary base station 240-2 may be directly established.

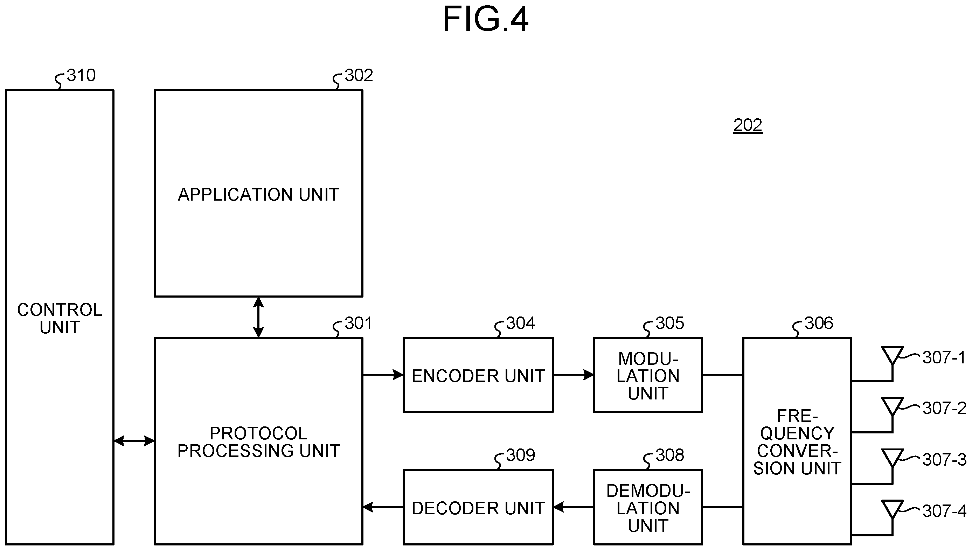

FIG. 4 is a block diagram illustrating a configuration of the mobile terminal 202 illustrated in FIG. 2. A transmission process in the mobile terminal 202 illustrated in FIG. 4 will be described. First, control data from a control unit 310 and user data from an application unit 302 are sent to a protocol processing unit 301. Control data and user data may be buffered. A buffer for control data and user data may be provided in the control unit 310, in the application unit 302, or in the protocol processing unit 301. The protocol processing unit 301 performs protocol processing such as SDAP, PDCP, RLC, and MAC, for example, determining a transmission destination base station in DC or the like, adding a header in each protocol, and the like. The data that has undergone the protocol processing is passed to an encoder unit 304 and subjected to encoding such as error correction. Some data may be directly output from the protocol processing unit 301 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 213. FIG. 4 illustrates the case where the number of antennas is four, but the number of antennas is not limited to four.

A reception process in the mobile terminal 202 is executed as follows. Wireless signals from the base station 213 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. The decoded data is passed to the protocol processing unit 301, and protocol processing such as MAC, RLC, PDCP, and SDAP, for example, an operation such as removal of a header in each protocol, is performed. Among the data that has undergone the protocol processing, the control data is passed to the control unit 310, and the user data is passed to the application unit 302.

A series of processes of the mobile terminal 202 is controlled by the control unit 310. Therefore, the control unit 310 is also connected to the respective units 302 and 304 to 309, which is not illustrated in FIG. 4.

Each unit of the mobile terminal 202, for example, the control unit 310, the protocol processing unit 301, the encoder unit 304, and the decoder unit 309, is implemented by, for example, processing circuitry including a processor and a memory. For example, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. Each unit of the mobile terminal 202, for example, the control unit 310, the protocol processing unit 301, the encoder unit 304, and the decoder unit 309, may be implemented by dedicated processing circuitry such as a field programmable gate array (FPGA), an application specific integrated circuit (ASIC), or a digital signal processor (DSP). In FIG. 4, the number of antennas used for transmission and the number of antennas used for reception by the mobile terminal 202 may be the same or different.

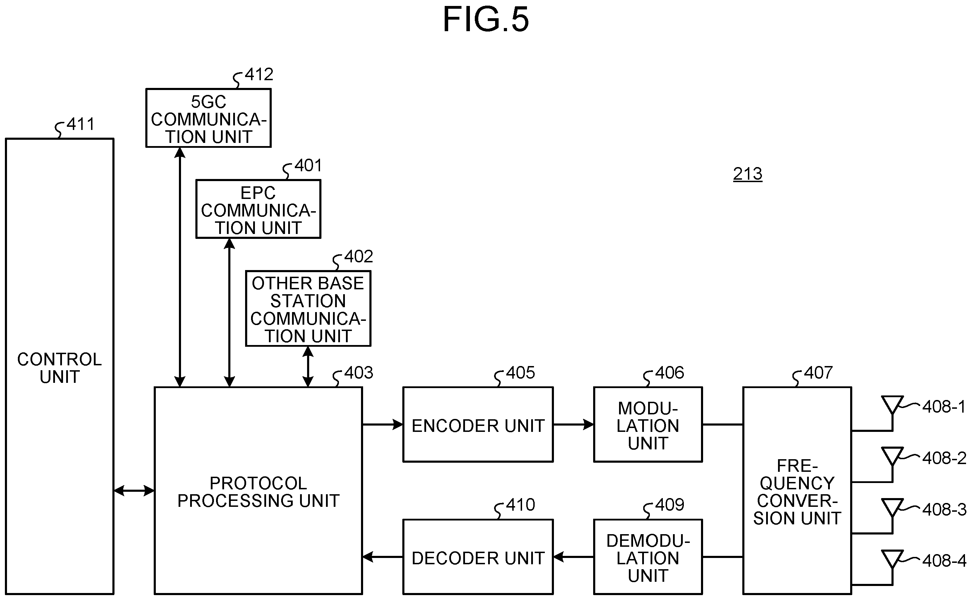

FIG. 5 is a block diagram illustrating a configuration of the base station 213 illustrated in FIG. 2. A transmission process in the base station 213 illustrated in FIG. 5 will be described. An EPC communication unit 401 transmits and receives data between the base station 213 and the EPC. A 5GC communication unit 412 transmits and receives data between the base station 213 and the 5GC (such as the 5GC unit 214). An other base station communication unit 402 transmits and receives data to and from other base stations. The EPC communication unit 401, the 5GC communication unit 412, and the other base station communication unit 402 each exchange information with a protocol processing unit 403. Control data from a control unit 411 and user data and control data from the EPC communication unit 401, the 5GC communication unit 412, and the other base station communication unit 402 are sent to the protocol processing unit 403. Control data and user data may be buffered. A buffer for control data and user data may be provided in the control unit 411, in the EPC communication unit 401, in the 5GC communication unit 412, or in the other base station communication unit 402.

The protocol processing unit 403 performs protocol processing such as SDAP, PDCP, RLC, and MAC, for example, routing transmission data in DC or the like, adding a header in each protocol, and the like. The data that has undergone the protocol processing is passed to an encoder unit 405 and subjected to encoding such as error correction. Some data may be directly output from the protocol processing unit 403 to a modulation unit 406 without being subjected to encoding. In addition, data may be sent from the protocol processing unit 403 to the other base station communication unit 402. For example, in the DC, data sent from the 5GC communication unit 412 or the EPC communication unit 401 may be sent to another base station, for example, a secondary base station, via the other base station communication unit 402. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 5 illustrates the case where the number of antennas is four, but the number of antennas is not limited to four.

A reception process in the base station 213 is executed as follows. Wireless signals from one or more mobile terminals 202 are received by the antennas 408-1 to 408-4. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC, RLC, PDCP, and SDAP, for example, an operation such as removal of a header in each protocol, is performed. Among the data that has undergone the protocol processing, the control data is passed to the control unit 411, the 5GC communication unit 412, the EPC communication unit 401, or the other base station communication unit 402, and the user data is passed to the 5GC communication unit 412, the EPC communication unit 401, or the other base station communication unit 402. Data sent from the other base station communication unit 402 may be sent to the 5GC communication unit 412 or the EPC communication unit 401. The data may be, for example, uplink data that is sent to the 5GC communication unit 412 or the EPC communication unit 401 via another base station in the DC.

A series of processes of the base station 213 is controlled by the control unit 411. Therefore, the control unit 411 is also connected to the respective units 401, 402, 405 to 410, and 412, which is not illustrated in FIG. 5.

Each unit of the base station 213, for example, the control unit 411, the protocol processing unit 403, the 5GC communication unit 412, the EPC communication unit 401, the other base station communication unit 402, the encoder unit 405, and the decoder unit 410, is implemented by processing circuitry including a processor and a memory, or dedicated processing circuitry such as FPGA, ASIC, or DSP, similarly to the mobile terminal 202 described above. In FIG. 5, the number of antennas used for transmission and the number of antennas used for reception by the base station 213 may be the same or different.

As an example of the configuration of the CU 215 illustrated in FIG. 2, one including a DU communication unit may be used except for the encoder unit 405, the modulation unit 406, the frequency conversion unit 407, the antennas 408-1 to 408-4, the demodulation unit 409, and the decoder unit 410 illustrated in FIG. 5. The DU communication unit is connected to the protocol processing unit 403. The protocol processing unit 403 in the CU 215 performs protocol processing such as PDCP and SDAP.

As an example of the configuration of the DU 216 illustrated in FIG. 2, a configuration in which a CU communication unit is provided may be used except for the EPC communication unit 401, the other base station communication unit 402, and the 5GC communication unit 412 illustrated in FIG. 5. The CU communication unit is connected to the protocol processing unit 403. The protocol processing unit 403 in the DU 216 performs protocol processing such as PHY, MAC, and RLC.

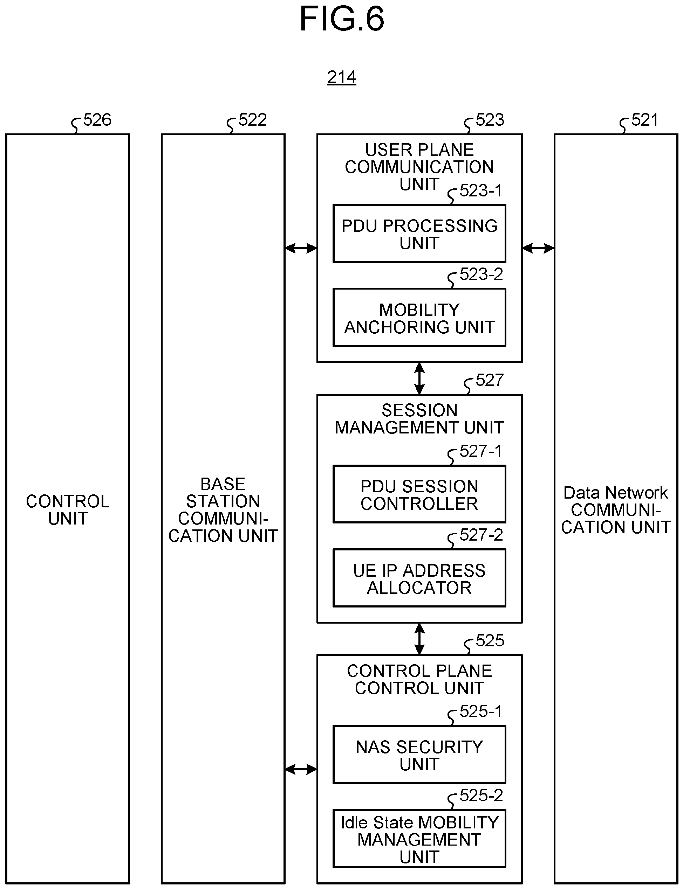

FIG. 6 is a block diagram illustrating a configuration of a 5GC unit. FIG. 6 depicts the configuration of the 5GC unit 214 illustrated in FIG. 2 described above. FIG. 6 depicts a case where an AMF configuration, an SMF configuration, and a UPF configuration are included in the 5GC unit 214 illustrated in FIG. 2. In the example illustrated in FIG. 6, the AMF may have the function of a control plane control unit 525, the SMF may have the function of a session management unit 527, and the UPF may have the functions of a user plane communication unit 523 and a Data Network communication unit 521. The Data Network communication unit 521 transmits and receives data between the 5GC unit 214 and the Data Network. A base station communication unit 522 transmits and receives data by means of the NG interface between the 5GC unit 214 and the base station 213. The user data sent from the Data Network is passed from the Data Network communication unit 521 to the base station communication unit 522 via the user plane communication unit 523, and transmitted to one or more base stations 213. The user data sent from the base station 213 is passed from the base station communication unit 522 to the Data Network communication unit 521 via the user plane communication unit 523, and transmitted to the Data Network.

The control data sent from the base station 213 is passed from the base station communication unit 522 to the control plane control unit 525. The control plane control unit 525 may pass the control data to the session management unit 527. Control data may be sent from the Data Network. The control data sent from the Data Network may be sent from the Data Network communication unit 521 to the session management unit 527 via the user plane communication unit 523. The session management unit 527 may send the control data to the control plane control unit 525.

The user plane control unit 523 includes a PDU processing unit 523-1, a mobility anchoring unit 523-2, and the like, and performs general processing on the user plane (hereinafter may be referred to as U-Plane.). The PDU processing unit 523-1 processes data packets, for example, transmits and receives packets to and from the Data Network communication unit 521 and transmits and receives packets to and from the base station communication unit 522. The mobility anchoring unit 523-2 is responsible for anchoring a data path at the time of mobility of the UE.

The session management unit 527 manages a PDU session provided between the UE and the UPF. The session management unit 527 includes a PDU session controller 527-1, a UE IP address allocator 527-2, and the like. The PDU session controller 527-1 manages a PDU session between the mobile terminal 202 and the 5GC unit 214. The UE IP address allocator 527-2 performs, for example, allocation of an IP address to the mobile terminal 202.

The control plane control unit 525 includes a NAS security unit 525-1, an Idle State mobility management unit 525-2, and the like, and performs general processing on the control plane (hereinafter may be referred to as C-Plane). The NAS security unit 525-1 ensures security of Non-Access Stratum (NAS) messages and the like. The Idle State mobility management unit 525-2 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 6. Similarly to the control unit 310 of the mobile terminal 202 described above, each unit of the 5GC unit 214 is implemented by, for example, processing circuitry including a processor and a memory, or by dedicated processing circuitry such as FPGA, ASIC, or DSP.

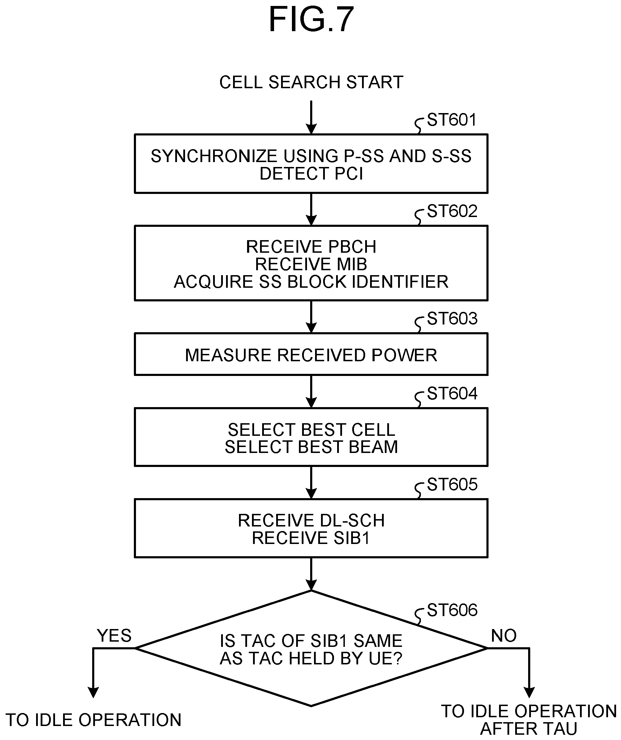

Next, an example of a cell search method in a communication system will be described. FIG. 7 is a flowchart schematically illustrating the procedure from a cell search to an idle operation performed by a communication terminal (UE) in an NR-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to physical cell identifiers (PCIs) allocated to cells. The number of PCIs available is 1008. The communication terminal performs synchronization using the 1008 PCIs and detects (identifies) the PCI of a synchronized cell.

The communication terminal receives the PBCH in step ST602 for the next synchronized cell. A Master Information Block (MIB) including cell configuration information is mapped to the BCCH on the PBCH. Therefore, the MIB is obtained by receiving the PBCH and obtaining the BCCH. Examples of the information of the MIB include system frame number (SFN), scheduling information of system information block (SIB) 1, subcarrier spacing of SIB 1 or the like, and information of DM-RS position.

Further, the communication terminal acquires an SS block identifier from the PBCH. A part of the bit string of the SS block identifier is included in the MIB. The remaining part of the bit string is included in an identifier that is used for sequence generation of the DM-RS accompanying the PBCH. The communication terminal acquires the SS block identifier by using the MIB included in the PBCH and the DM-RS sequence accompanying the PBCH.

Next, in step ST603, the communication terminal measures the received power of the SS block.

Next, in step ST604, the communication terminal selects, from among the one or more cells detected by step ST603, a cell having the best reception quality, e.g. a cell having the highest received power, or the best cell. In addition, the communication terminal selects a beam having the best reception quality, for example, a beam having the highest received power of the SS block, that is, the best beam. For the selection of the best beam, for example, the received power of the SS block for each SS block identifier is used.

Next, in step ST605, the communication terminal receives the DL-SCH based on the scheduling information of SIB1 included in the MIB, and obtains System Information Block (SIB) 1 in the broadcast information BCCH. The SIB1 includes information related to access to the cell, configuration information of the cell, and scheduling information of other SIBs (SIBk; k is an integer of ≥2). The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC). The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

Next, an example of a random access method in a communication system will be described. In the random access, four-step random access and two-step random access are used. In addition, for each of the four-step random access and the two-step random access, there are contention-based random access, that is, random access in which timing collision with another mobile terminal may occur and contention-free random access without collision

An example of a contention-based four-step random access method will be described. As a first step, the mobile terminal transmits a random access preamble to the base station. The random access preamble may be selected by the mobile terminal from a predetermined range, or may be individually assigned to mobile terminals and provided as notification from the base station.

As a second step, the base station transmits a random access response to the mobile terminal. The random access response includes the uplink scheduling information that is used in a third step, the terminal identifier that is used in the uplink transmission in the third step, and the like.

As the third step, the mobile terminal performs uplink transmission to the base station. The mobile terminal uses the information acquired in the second step for uplink transmission. As a fourth step, the base station notifies the mobile terminal of the presence or absence of contention resolution. The mobile terminal that has been notified that there is no contention ends the random access processing. The mobile terminal that has been notified that there is a contention performs the processing again from the first step.

The contention-free four-step random access method is different from the contention-based four-step random access method in the following points. That is, prior to the first step, the base station pre-allocates a random access preamble and uplink scheduling to the mobile terminal. In addition, the notification of the presence or absence of contention resolution in the fourth step is unnecessary.

An example of a contention-based two-step random access method will be described. As a first step, the mobile terminal performs random access preamble transmission and uplink transmission to the base station. As a second step, the base station notifies the mobile terminal of the presence or absence of contention. The mobile terminal that has been notified that there is no contention ends the random access processing. The mobile terminal that has been notified that there is a contention performs the processing again from the first step.

The collision-free two-step random access method is different from the contention-based two-step random access method in the following points. That is, prior to the first step, the base station pre-allocates a random access preamble and uplink scheduling to the mobile terminal. In addition, in a second step, the base station transmits a random access response to the mobile terminal.

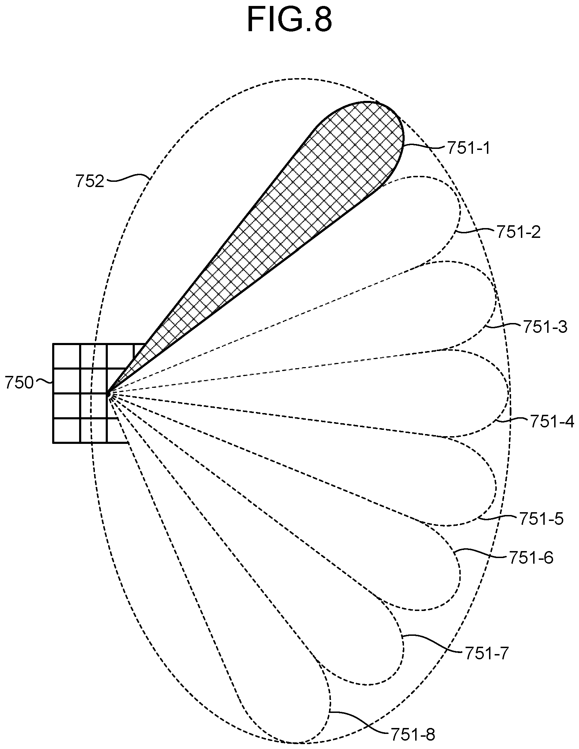

FIG. 8 illustrates an exemplary configuration of a cell in NR. In the NR cell, narrow beams are formed and transmitted in different directions. In the example illustrated in FIG. 8, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell 752.

FIG. 8 illustrates an example in which the number of beams the base station 750 uses is eight, but the number of beams may be different from eight. In addition, the number of beams the base station 750 simultaneously uses is one in the example illustrated in FIG. 8, but may be two or more.

The concept of quasi-colocation (QCL) is used to identify the beam (see Non Patent Literature 14 (3GPP TS 38.214)). That is, the beam is identified by information indicating which reference signal (e.g. SS Block, CSI-RS) beam can be regarded as the same as the beam. The information may include information related to the type of information about a viewpoint from which beams can be regarded as the same, for example, information related to Doppler shift, Doppler shift spread, average delay, average delay spread, and spatial Rx parameters (see Non Patent Literature 14 (3GPP TS 38.214)).

3GPP supports sidelink (SL) for device-to-device (D2D) communication and vehicle-to-vehicle (V2V) communication (see Non Patent Literature 1 and Non Patent Literature 16). SL is defined by the PC5 interface.

SL communication is designed to support PC5-S signaling in order to support unicast and groupcast in addition to broadcast (see Non Patent Literature 27 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 27 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

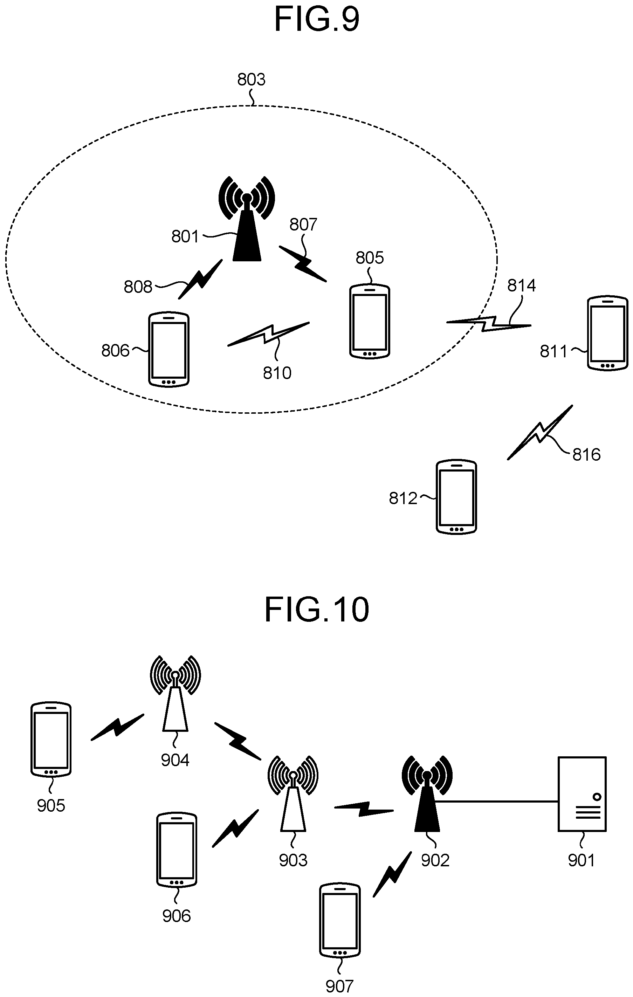

FIG. 9 illustrates an exemplary connection configuration of mobile terminals in the SL communication. In the example illustrated in FIG. 9, a UE 805 and a UE 806 exist within a coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 exist outside the coverage 803. SL communication 814 is performed between the UE 805 and the UE 811. In addition, SL communication 816 is performed between the UE 811 and the UE 812.

As an example of communication between the UE and the NW via a relay in the SL communication, the UE 805 illustrated in FIG. 9 relays communication between the UE 811 and the base station 801.

A configuration similar to that in FIG. 4 may be used for the UE that performs relay. The relay processing in the UE will be described with reference to FIG. 4. The relay processing by the UE 811 in the communication from the UE 805 to the base station 801 will be described. Wireless signals from the base station UE 811 are received by the antennas 307-1 to 307-4. The reception signal is converted from the wireless reception frequency into a baseband signal in the frequency conversion unit 306, and demodulation is performed in the demodulation unit 308. The demodulation unit 308 may perform weight calculation and multiplication. The demodulated data is passed to the decoder unit 309, and decoding such as error correction is performed. The decoded data is passed to the protocol processing unit 301, and protocol processing such as MAC and RLC for use in communication with the UE 811, for example, an operation such as removal of a header in each protocol, is performed. In addition, protocol processing such as RLC and MAC for use in communication with the base station 801, for example, adding a header in each protocol, is performed. In the protocol processing unit 301 of the UE 811, protocol processing of the PDCP and the SDAP may be performed. The data that has undergone the protocol processing is passed to the encoder unit 304 and subjected to encoding such as error correction. Some data may be directly output from the protocol processing unit 301 to the modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to the frequency conversion unit 306 to be converted into a wireless transmission frequency. Thereafter, the transmission signals are transmitted from antennas 307-1 to 307-4 to the base station 801.

Although the example of the relay by the UE 811 in the communication from the UE 805 to the base station 801 has been described above, similar processing is also used in the relay of the communication from the base station 801 to the UE 811.

5G base stations can support Integrated Access and Backhaul (IAB) (see Non Patent Literature 2 and 20). A base station (hereinafter may be referred to as an IAB base station) that supports IAB is constituted by an IAB donor CU that is a CU of a base station that operates as an IAB donor providing the IAB function, an IAB donor DU that is a DU of a base station that operates as an IAB donor, and an IAB node that is connected to the IAB donor DU and to UE using a wireless interface. An F1 interface is provided between the IAB node and the IAB donor CU (see Non Patent Literature 2).

An example connection of the IAB base station is illustrated in FIG. 10. An IAB donor CU 901 is connected to an IAB donor DU 902. An IAB node 903 is connected to the IAB donor DU 902 using a wireless interface. The IAB node 903 is connected to an IAB node 904 using a wireless interface. That is, multi-stage connection of IAB nodes may be performed. A UE 905 is connected to the IAB node 904 using a wireless interface. A UE 906 may be connected to the IAB node 903 using a wireless interface, or a UE 907 may be connected to the IAB donor DU 902 using a wireless interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

In the connection between the IAB donor DU and the IAB node and the connection between the IAB nodes, a Backhaul Adaptation Protocol (BAP) layer is provided (see Non Patent Literature 29). The BAP layer performs operations such as routing of received data to the IAB donor DU and/or the IAB node, mapping to the RLC channel, and the like (see Non Patent Literature 29).

As an example of the configuration of the IAB donor CU, a configuration similar to that of the CU 215 is used.

As an example of the configuration of the IAB donor DU, a configuration similar to that of the DU 216 is used. The protocol processing unit of the IAB donor DU performs processing of the BAP layer, for example, adding a BAP header in downlink data, routing to the IAB node, removing a BAP header in uplink data, and the like.

As an example of the configuration of the IAB node, a configuration without the EPC communication unit 401, the other base station communication unit 402, and the 5GC communication unit 412 illustrated in FIG. 5 may be used.

The transmission/reception processing in the IAB node will be described with reference to FIGS. 5 and 10. The transmission/reception processing of the IAB node 903 in communication between the IAB donor CU 901 and the UE 905 will be described. In the uplink communication from the UE 905 to the IAB donor CU 901, a wireless signal from the IAB node 904 is received by the antenna 408 (some or all of the antennas 408-1 to 408-4). The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC and RLC for use in communication with the IAB node 904, for example, an operation such as removal of a header in each protocol, is performed. In addition, routing to the IAB donor DU 902 using the BAP header is performed, and protocol processing such as RLC and MAC for use in communication with the IAB donor DU 902, for example, an operation of adding a header in each protocol, is performed. The data that has undergone the protocol processing is passed to the encoder unit 405 and subjected to encoding such as error correction. Some data may be directly output from the protocol processing unit 403 to the modulation unit 406 without being subjected to encoding. The encoded data is subjected to modulation in the modulation unit 406. The modulation unit 406 may perform precoding for MIMO. The modulated data is converted into a baseband signal and then output to the frequency conversion unit 407 to be converted into a wireless transmission frequency. Thereafter, transmission signals are transmitted from the antennas 408-1 to 408-4 to the IAB donor DU 902. Similar processing is performed in the downstream communication from the IAB donor CU 901 to the UE 905.

The IAB node 904 also performs transmission/reception processing similar to that of the IAB node 903. In the protocol processing unit 403 of the IAB node 903, as the processing of the BAP layer, for example, processing such as adding a BAP header in uplink communication, routing to the IAB node 904, and removing a BAP header in downstream communication, is performed.

In 3GPP, it has been proposed that mobility control such as HO between cells is performed by L1/L2 mobility (see Non Patent Literature 30 (3GPP RP-212710)). However, no specific method thereof has been disclosed. For example, it is unknown how a target cell to be a HO destination is determined without RRC control, how the UE accesses the target cell, and the like. This leads to a problem that inter-cell mobility control cannot be implemented by L1/L2 mobility, and the delay time or the like at the time of mobility cannot be reduced.

The first embodiment discloses a method for solving this problem.

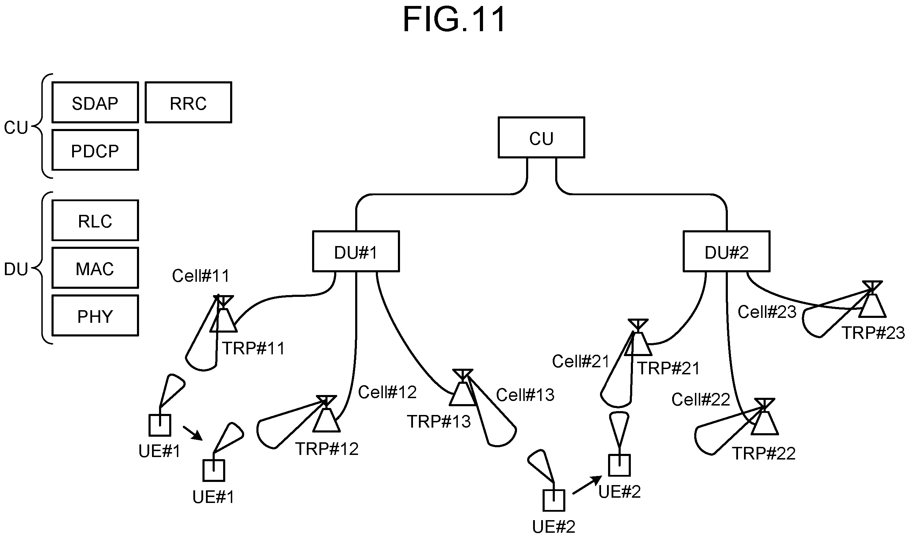

FIG. 11 is a conceptual diagram of inter-cell L1/L2 mobility. The inter-cell L1/L2 mobility is inter-cell mobility by L1/L2 processing, that is, cell change. FIG. 11 illustrates inter-cell L1/L2 mobility within one gNB. The gNB includes one CU and one or more DUs connected to the CU. The CU has protocols of RRC, SDAP, and PDCP. The DU has protocols of RLC, MAC, and PHY. The CU and the DU are connected by an F1 interface. In FIG. 11, two DUs (DU#1 and DU#2) are connected to the CU to form one gNB. The DU connects to one or more TRPs. In FIG. 11, DU#1 connects to TRP#11 to TRP#13. DU#2 connects to TRP#21 to TRP#23. The gNB constitutes one or more cells. For example, in FIG. 11, each TRP is used to constitute a cell. TRP#n is used to constitute cell #n. In a case where a cell is constituted using TRP, communication with UE in the cell is performed via the TRP constituting the cell.

Inter-cell L1/L2 mobility will be described. For example, UE#1 is connected to cell #11. The cell to which UE#1 connects is changed from cell #11 to cell #12 as UE#1 moves. The beam for use in communication with UE#1 is also changed. The cell change is performed by L1/L2 mobility processing. The cell change may be referred to as HO. The cell change may also be referred to as mobility.

Inter-cell L1/L2 mobility including a cell change between different DUs will be described. For example, UE#2 is connected to cell #13. The cell to which UE#2 connects is changed from cell #13 to cell #21 as UE#2 moves. The beam for use in communication with UE#2 is also changed. Cell #13 is constituted by DU#1, and cell #21 is constituted by DU#2. Therefore, the cell to which UE#2 connects is changed between different DUs. Thus, the cell change including a cell change between different DUs is performed by the L1/L2 mobility processing.

The gNB determines a cell that is a candidate for the target cell in the inter-cell L1/L2 mobility. The cell may be referred to as a candidate cell. The number of candidate cells may be one or more. The candidate cell may be a candidate for the PCell. The candidate cell may be a candidate cell for the case that the PCell is changed by mobility. The candidate cell may be for change of the PCell in the MCG. The candidate cell may be a candidate for the PSCell. The candidate cell may be a candidate cell for the case that the PSCell is changed by mobility. The candidate cell may be for change of the PSCell in the SCG.

Conventional mobility control includes conditional HO (CHO) (see Non Patent Literature 2 (3GPP TS 38.300)). A candidate cell is used in the CHO. However, CHO, which is L3 mobility that is conventional mobility control involving RRC, is not applicable to L1/L2 mobility. Preferably, a candidate cell for the target cell in the inter-cell L1/L2 mobility is determined separately from the candidate cell of the CHO. Hereinafter, unless otherwise specified, a candidate cell for the inter-cell L1/L2 mobility is referred to as a candidate cell.

The candidate cell may be limited to the serving cell. As another method, the candidate cell may be determined from the cell set as the serving cell. In this way, it is possible to simplify the setting process of the candidate cell and reduce the amount of signaling and information necessary for the process.

The gNB may determine one or more beams that are candidates for the target. The beam may be referred to as a candidate beam. The gNB may use some or all beams of the candidate cells as candidate beams. The gNB may determine one or more antenna ports that are candidates for the target. The antenna port may be referred to as a candidate antenna port (AP). The gNB may use some or all antenna ports of the candidate cells as candidate APs. The gNB may determine one or more antenna panels that are candidates for the target. The antenna panel may be referred to as a candidate panel. The gNB may use some or all of antenna panels of the candidate cells as candidate panels. Hereinafter, unless otherwise specified, candidate beams, candidate APs, and candidate panels may be included as candidate cells.

In the above description, the node for determining the candidate cell is the gNB. The source gNB (S-gNB) that is the HO source in the inter-cell L1/L2 mobility may determine the candidate cell or the like. The CU of the gNB may determine the candidate cell. In this way, for example, the cell subordinate to the CU can be easily set as the candidate cell. A candidate cell can be determined from more cells. As another method, the DU of the gNB may determine the candidate cell. Determining the candidate cell by the DU can facilitate, for example, determination of the candidate cell using the L1 measurement result.

Candidate cells and the like determined by the CU and the DU may differ. For example, the CU may determine a candidate cell, and the DU may determine a candidate beam and a candidate AP. For example, the determination of a candidate cell may be performed by RRC, and the determination of a candidate beam and a candidate AP may be performed by MAC or PHY. The DU may transmit information related to the determined candidate beam or candidate AP to the CU. Alternatively, the DU may transmit information related to the determined candidate beam or candidate AP to the UE. The DU may transmit information related to the candidate beam or candidate AP to the UE in association with the candidate cell determined by the CU. In this way, it is possible to flexibly set candidate cells in each process of the CU and the DU.

In 3GPP, a measurement method in which a measurement result is reported using an RRC message is provided as measurement of reception quality (see Non Patent Literature 2 (3GPP TS 38.300)). Hereinafter, the measurement method is referred to as L3 measurement. L3 measurement results include cell measurement results and beam measurement results.

In 3GPP, a measurement method in which a measurement result is included in UCI and reported is provided as measurement of reception quality (see Non Patent Literature 12 (3GPP TS 38.212)). Hereinafter, the measurement method is referred to as L1 measurement. L1 measurement results include CSI-RS measurement results and SSB measurement results.

The gNB may notify the UE of the L3 measurement setting. The CU may notify the UE of the L3 measurement setting via the DU. Preferably, the RRC message is used for notification of the L3 measurement setting from the CU to the UE. Preferably, F1 signaling is used from the CU to the DU, and RRC signaling is from the DU to the UE. The RRC message may be encapsulated and delivered from the CU to the DU by F1 signaling. Using the received L3 measurement setting, the UE performs L3 measurement and reports the measurement result (L3 measurement result). The UE reports the L3 measurement result to the gNB. The UE may report the L3 measurement result to the CU. The UE may report the L3 measurement result to the CU through the DU. Preferably, the RRC message is used to report the L3 measurement result from the UE. Preferably, RRC signaling is used from the UE to the DU, and F1 signaling is used from the DU to the CU. The RRC message may be encapsulated and delivered from the DU to the CU by F1 signaling.

The L3 measurement setting may include the beam measurement setting. The L3 measurement result report may include the beam measurement result. The setting and report of measurement of beams of the serving cell and a cell that is not the serving cell may be included. For the L3 measurement by the UE, a conventional method may be applied. It is possible to avoid complication of the measurement method.

The gNB may notify the UE of the L1 measurement setting. The CU may notify the UE of the L1 measurement setting via the DU. Preferably, the RRC message is used for notification of the L1 measurement setting from the CU to the UE. Preferably, F1 signaling is used from the CU to the DU, and RRC signaling is from the DU to the UE. The DU may notify the UE of the L1 measurement setting. Preferably, the RRC message is used for notification of the L1 measurement setting from the DU to the UE. Using the received L1 measurement setting, the UE performs L1 measurement and reports the measurement result (L1 measurement result). The UE reports the L1 measurement result to the gNB. The UE may report the L1 measurement result to the DU. Preferably, the L1/L2 control signal is used to report the L1 measurement result from the UE. For example, the UE may include the L1 measurement result in the UCI and transmit the UCI to the DU by using the PUCCH. The L1 measurement setting may include the beam measurement setting. The L1 measurement result report may include the beam measurement result. The setting and report of measurement of beams of the serving cell and a cell that is not the serving cell may be included.

Information for identifying the L1 measurement setting, e.g., an identifier, may be provided. The information may be associated with the L1 measurement setting or included in the L1 measurement setting. The identifier may be uniquely set in one DU, or may be uniquely set among one or more DUs. For example, the identifier may be uniquely set in one CU. This is effective, for example, in a case where a plurality of L1 measurement settings are configured on the UE. Preferably, the UE includes information identifying the L1 measurement setting in the L1 measurement result report. The DU or the CU can recognize which L1 measurement setting the measurement result correlates to. For example, it is also effective to make it possible for the DU to identify the L1 measurement setting to the UE.

The DU may transmit the L1 measurement result acquired from the UE to the CU. Preferably, F1 signaling is used for transmission of the L1 measurement result of the UE from the DU to the CU. A new message may be provided for the transmission. For example, a message for wireless information transmission of the UE may be used. Radio Information Transfer messages may be used. Alternatively, an existing message may be used. For example, DU-CU RADIO INFORMATION TRANSFER may be used. By using an existing message, it is possible to avoid complication of the process of transmitting the L1 measurement result from the DU to the CU.

Disclosed below are eight examples of information included in the L1 measurement result of the UE transmitted from the DU to the CU.
(1) L1 measurement result for each beam for each cell for each DU.
(2) Identifier of DU.
(3) Identifier of cell.
(4) Identifier of serving cell.
(5) Identifier of beam.
(6) Identifier of UE.
(7) Identification information of L1 measurement setting.
(8) Combinations of (1) to (7).

Item (1) may be, for example, the reception quality for each beam. For example, RSRP, RSRQ, Signal to Interference Noise Ratio (SINR), or the like may be used. The measurement target is preferably, for example, synchronization signal block (SSB) or CSI-RS. The L1 measurement result is, for example, RSRP of CSI-RS. For example, CSI including the L1 measurement result may be used. The L1 measurement result may be associated with the identifier of the beam in (5). Item (2) may be the identifier of the candidate DU. The identifier given to the candidate DU may be used. Item (3) may be the identifier of the measured cell. An example may be the identifier of the candidate cell. The identifier given to the candidate cell may be used. Preferably, this is used when the candidate cell has been determined, for example. As another example, PCI may be used. This may be used when the cell to be subjected to the L1 measurement is a serving cell, or may be used when the cell to be subjected to the L1 measurement is not a serving cell. Item (4) may be used when the cell to be subjected to the L1 measurement is a serving cell. ServCellIndex may be used. Item (5) is information for identifying the beam. For example, the identifier of the measured beam may be used. For example, the identifier of the candidate beam may be used. Examples include SSB index, SSB resource indicator (SSBRI), identifier of CSI-RS, CSI-RS reference indicator (CRI), and the like. In addition, for example, information related to QCL may be used. The information related to QCL may be, for example, transmission configuration indication (TCI) state (TCI-State) information indicating an association between the reference signal and the beam. The TCI-State information may indicate an association between the reference signal and the physical channel transmitted on the beam.

The UE may report the L1 measurement result to the CU. The UE may report the L1 measurement result to the CU through the DU. Preferably, the RRC message is used to report the L1 measurement result from the UE. RRC signaling may be used from the UE to the DU, and F1 signaling may be used from the DU to the CU.

In this way, the CU can acquire the L1 measurement result by the UE.

The CU may determine a candidate cell by using the L3 measurement result. As another method, the CU may determine a candidate cell by using the L1 measurement result. Each measurement result may be selectively used to determine each candidate. For example, a candidate DU, a candidate cell, and a candidate beam may be determined by using the L3 measurement result. Preferably, the beam measurement result of the L3 measurement is used to determine a candidate beam. For example, a candidate DU and a candidate cell may be determined by using the L3 measurement result, and a candidate beam may be determined by using the L1 measurement result. In this way, it is possible to determine each candidate using an appropriate measurement result.

A candidate cell may be a serving cell. A candidate cell is selected from among serving cells. The candidate cell is set as a serving cell. In this way, the L1 measurement by the UE can be limited to the serving cell. As a method of setting and reporting the L1 measurement, an existing method may be appropriately applied. For example, CSI report may be used. The UCI may be included in the UCI and transmitted from the UE to the gNB via the PUCCH and/or the PUSCH. The gNB may be the DU.

The candidate cell may be selected irrespective of the serving cell. Conventional L1 measurement is limited to serving cells. When the candidate cell is selected irrespective of the serving cell, the L1 measurement is not limited to the serving cell. The method of setting and reporting the L1 measurement of cells other than the serving cell disclosed above may be appropriately applied.

The CU may request the DU to set a candidate cell. The DU determines a candidate cell. The DU notifies the CU of the setting of the determined candidate cell. The CU may determine the DU to be requested to set a candidate cell. The DU may be a candidate DU. Preferably, F1 signaling is used for the request to set a candidate cell from the CU to the DU. A new message may be provided for the request. As another method, an existing message may be used. For example, UE CONTEXT SETUP REQUEST may be used. It is possible to avoid complication of transmission processing of the message. Preferably, F1 signaling is used for transmission of the determined candidate cell setting from the DU to the CU. A new message may be provided for the transmission. As another method, an existing message may be used. For example, UE CONTEXT SETUP RESPONSE may be used. It is possible to avoid complication of transmission processing of the message.

The CU may transmit the L3 measurement result and/or the L1 measurement result by the UE to the DU. Preferably, the above-described L3 measurement result and L1 measurement result are appropriately applied. The DU may use the L3 measurement result and/or the L1 measurement result by the UE to determine the candidate cell.

The DU may acquire the L3 measurement result from the UE. For example, in the L3 measurement result from the UE to the CU disclosed above, the DU receives RRC signaling including the L3 measurement result from the UE, and acquires the L3 measurement result. Preferably, the DU acquires the L3 measurement result instead of transparently transmitting the L3 measurement result from the UE to the CU. In this way, the DU can recognize the L3 measurement result by the UE.

In this way, the DU can determine a candidate cell suitable for L1/L2 mobility of the UE.

The DU may transmit a request for inter-cell L1/L2 mobility processing to the CU. The CU that has received the request may determine the inter-cell L1/L2 mobility processing. The CU may determine a candidate cell for the inter-cell L1/L2 mobility processing. The CU may determine the candidate cell setting. Preferably, F1 signaling is used for the inter-cell L1/L2 mobility processing request from the DU to the CU. A new message may be provided for the request. An existing message may be used. For example, UE CONTEXT MODIFICATION REQUIRED may be used.

Disclosed below are eight examples of information included in the inter-cell L1/L2 mobility processing request from the DU to the CU.
(1) Identifier of UE.
(2) Identifier of DU.
(3) L1 measurement result by UE.
(4) Identifier of candidate cell.
(5) Candidate cell setting.
(6) Identifier of candidate beam.
(7) Candidate beam setting.
(8) Combinations of (1) to (7).

Preferably, item (2) is the identifier the DU itself. Item (3) L1 measurement result by UE may be associated with item (6) identifier of candidate beam. By including the identifier of the candidate cell and the identifier of the candidate beam, it is possible to notify the CU of which candidate cell or candidate beam is set as a candidate. The CU may perform determination of the inter-cell L1/L2 mobility and determination of the candidate cell and the candidate beam for the UE by using the request received from the DU.

In this way, the DU can activate the L1/L2 mobility processing on the UE. For example, the L1/L2 mobility processing on the UE may be activated by using the L1 measurement result received by the DU from the UE. Consequently, the L1/L2 mobility processing can be activated early.

The CU transmits information related to inter-cell L1/L2 mobility to the DU. Disclosed below are 12 examples of information related to inter-cell L1/L2 mobility which are transmitted from the CU to the DU.
(1) Instruction information of inter-cell L1/L2 mobility.
(2) Cancellation information of inter-cell L1/L2 mobility.
(3) Information indicating whether to execute inter-cell L1/L2 mobility.
(4) Information as to whether to permit inter-cell L3 mobility.
(5) Condition under which DU determines inter-cell L1/L2 mobility.
(6) Setting information for in DU or between DUs.
(7) Information for determining in DU or between DUs.
(8) Information related to UE to be subjected to inter-cell L1/L2 mobility.
(9) Information related to bearer.
(10) Information related to candidate cell.
(11) Identifier of UE.
(12) Combinations of (1) to (11).

Item (1) is information for notifying the DU of the instruction of inter-cell L1/L2 mobility. The DU that has received the information configures the inter-cell L1/L2 mobility setting. This information may be information for notification of execution of inter-cell L1/L2 mobility. The DU that has received the information executes inter-cell L1/L2 mobility. For example, transmission is preferably performed when inter-cell L1/L2 mobility is performed on the target UE served by the DU.

Item (2) is information for notifying the DU of the cancellation of inter-cell L1/L2 mobility. The DU that has received the information cancels inter-cell L1/L2 mobility. For example, transmission is preferably performed when the setting of inter-cell L1/L2 mobility is cancelled on the target UE served by the DU.

Item (3) is information indicating whether to execute inter-cell L1/L2 mobility for the DU. The DU that has received information indicating execution executes inter-cell L1/L2 mobility. The DU that has received information indicating non-execution does not execute inter-cell L1/L2 mobility.

Item (4) is information indicating whether to permit the execution of inter-cell L3 mobility in parallel when inter-cell L1/L2 mobility is set. Information on the processing method of inter-cell L3 mobility as the inter-cell L1/L2 mobility is set may be included. For example, priority order information of inter-cell L1/L2 mobility and inter-cell L3 mobility may be included. Consequently, the DU can perform processing for the case that inter-cell L3 mobility occurs when inter-cell L1/L2 mobility is set for the target UE.

Item (5) is a condition under which the DU executes inter-cell L1/L2 mobility for the target UE. For example, a threshold may be provided. The CU provides a threshold value for the L1 measurement result by the UE and notifies the DU. For example, the DU does not execute inter-cell L1/L2 mobility when the L1 measurement result is equal to or less than the threshold, and executes inter-cell L1/L2 mobility when the L1 measurement result exceeds the threshold. In this way, inter-cell L1/L2 mobility with reference to a predetermined threshold can be executed. The CU can control execution of inter-cell L1/L2 mobility.

Item (6) is information indicating whether inter-cell L1/L2 mobility is performed within one DU or between a plurality of DUs. In the case of inter-cell L1/L2 mobility within a DU, the DU executes L1/L2 mobility between candidate cells in the DU. In the case of inter-cell L1/L2 mobility between DUs, the DU executes L1/L2 mobility between candidate cells in a plurality of DUs including other DCs. Even when candidate cells are set in a plurality of DUs, setting in the DU may be configured. Preferably, the DU executes L1/L2 mobility between candidate cells in the DU. In this way, according to the situation of the DU, it is possible to control whether to perform inter-cell L1/L2 mobility within the DU or to perform inter-cell L1/L2 mobility between a plurality of DUs including other DUs.

Item (7) is information for determining whether the inter-cell L1/L2 mobility is performed in the DU or between DUs. For example, a threshold may be provided. The CU provides a threshold value for the L1 measurement result by the UE and notifies the DU. For example, the DU executes inter-cell L1/L2 mobility within the DU when the L1 measurement result is equal to or less than the threshold, and executes inter-cell L1/L2 mobility between DUs when the L1 measurement result exceeds the threshold. Another example may be load information of the DU. The load of the DU may be the resource or the number of UEs. The resource may be the proportion of the resource in use. The number of UEs may be the number of UEs in the connected state. Another example may be the QoS required for the UE. Another example may be the priority order of logical channels to be subjected to inter-cell L1/L2 mobility. A threshold may be provided for these. In this way, for example, inter-cell L1/L2 mobility can be executed within a DU or between DUs with reference to a predetermined threshold. Whether the CU is within the DU or between the DUs can be controlled.

Item (8) may be, for example, the identifier of the UE. Item (8) may be the capability of the UE. Item (8) may be the access restriction of the UE to the candidate cell. For example, these items of information may be used in the DU to determine execution of inter-cell L1/L2 mobility.

Item (9) is information related to the bearer to be subjected to inter-cell L1/L2 mobility. The information is, for example, bearer type, bearer identifier, or the like. Item (9) may be information related to all bearers of UE to be subjected to inter-cell L1/L2 mobility. In this way, the DU can recognize for which bearer the inter-cell L1/L2 mobility is executed.

Item (10) is information related to cells that are candidates for inter-cell L1/L2 mobility. Item (10) is information related to candidate cells set for the UE to be subjected to inter-cell L1/L2 mobility. An example may be the identifier of the candidate cell. An example may be the AS setting of the candidate cell. An example may be the RRC setting of the candidate cell. An example may be the setting of ServingCellConfig which is the RRC setting. Information related to the candidate cell may include information related to the beam. For example, the information may be the identifier or setting information of SSB or the identifier or setting information of CSI-RS. For example, the information may be QCL information. In this way, the DU can recognize the candidate cell set for the UE to be subjected to inter-cell L1/L2 mobility and the setting thereof.

Item (11) is information for identifying the UE to be subjected to inter-cell L1/L2 mobility.

The DU that has received information related to inter-cell L1/L2 mobility determines execution of inter-cell L1/L2 mobility for the UE. For example, the MAC of the DU may perform determination. Alternatively, the PHY of the DU may perform determination. In this way, inter-cell L1/L2 mobility can be executed early. Inter-cell L1/L2 mobility can be executed in a timely manner according to the situation of the UE.

The identifier of a candidate cell for the inter-cell L1/L2 mobility will be disclosed. A unique identifier is given to each cell in the candidate cell. The identifier of the candidate cell may be referred to as a candidate cell identifier. Preferably, an identifier different from the identifier (ServCellIndex) given to the serving cell is given for the candidate cell. For example, the identifier may be indicated by an integer of 0 to k. This enables identification with a smaller number of bits than the PCI. In this way, it is possible to cause the UE to be subjected to inter-cell L1/L2 mobility to identify a cell that is not set as a serving cell as a candidate cell. In this way, ServCellIndex may not be changed before and after inter-cell L1/L2 mobility. The identifier can be given to the candidate cell without changing the conventional operation of serving cell identifiers.

The candidate cell identifier may be associated with the PCI of the candidate cell. The associated information may be included in the information related to inter-cell L1/L2 mobility. In a case where the candidate cell is a serving cell, the candidate cell identifier may be associated with the identifier given to the serving cell of the candidate cell. The associated information may be included in the information related to inter-cell L1/L2 mobility.

The candidate cell identifier may be used in each protocol of RRC, RLC, MAC, and PHY. For example, the candidate cell identifier is used in the MAC. For example, the candidate cell identifier may be used as an identifier for identifying the candidate cell in the MAC CE. For example, the candidate cell identifier is used in the PHY. For example, the candidate cell identifier may be used as an identifier for identifying the candidate cell in the DCI. In this way, it is possible to identify the candidate cell in each protocol. For example, the candidate cell can be identified with a smaller number of bits than in the case where PCI is used to identify the candidate cell in each protocol.

As another method, the identifier (ServCellIndex) given to the serving cell may be used. For example, the identifier may be used for the method of limiting the candidate cell to the serving cell or the method of selecting a candidate cell from among serving cells. The identifier given to the serving cell may be used instead of the identifier for the candidate cell. In this way, it is not necessary to give a new identifier for the candidate cell.

The DU configures the RLC setting and/or MAC setting and/or PHY setting in the candidate cell and/or the bearer in receiving the information related to the candidate cell and/or the information related to the bearer. The DU maintains the setting of the candidate cell and/or the bearer until the setting is released.

The RLC setting and/or MAC setting and/or PHY setting in the candidate cell and/or the bearer may be the same as before the inter-cell L1/L2 mobility. In such a case, the RLC setting and/or MAC setting and/or PHY setting in the candidate cell and/or the bearer may not be transmitted to the DU. As another method, information indicating that the setting is the same as before the inter-cell L1/L2 mobility may be transmitted to the DU. In this way, the setting process can be simplified.

Preferably, F1 signaling is used for transmission of information related to inter-cell L1/L2 mobility. A new message may be provided for the transmission. Alternatively, an existing message may be used. For example, UE CONTEXT SETUP REQUEST may be used. Setting to the DU is enabled. This may be used when notification to the UE is not necessary as the RRC setting. For example, UE CONTEXT MODIFICATION REQUEST may be used. In addition to the setting to the DU, setting to the UE is enabled. Notification to the UE is enabled as the RRC setting. In this way, information related to inter-cell L1/L2 mobility can be transmitted from the CU to the DU.

Processing in cases where CA or DC is set for the UE to be subjected to inter-cell L1/L2 mobility will be disclosed. In a case where CA is set for the UE to be subjected to inter-cell L1/L2 mobility, the CA may be released when the inter-cell L1/L2 mobility is performed. In a case where DC is set for the UE to be subjected to inter-cell L1/L2 mobility, the DC may be released when the inter-cell L1/L2 mobility is performed. In the case of PCell change processing by the inter-cell L1/L2 mobility, the DC may be released. In the case of PSCell change processing by the inter-cell L1/L2 mobility, the DC may not be released. These may be appropriately combined. In this way, inter-cell L1/L2 mobility processing can be simplified.

As another method, in a case where CA is set for the UE to be subjected to inter-cell L1/L2 mobility, the CA may not be released when the inter-cell L1/L2 mobility is performed. In a case where DC is set for the UE to be subjected to inter-cell L1/L2 mobility, the DC may not be released when the inter-cell L1/L2 mobility is performed. When the inter-cell L1/L2 mobility is performed, CA and DC may not be released.

The serving cell may be maintained before and after inter-cell L1/L2 mobility. The source cell before the inter-cell L1/L2 mobility may be the serving cell after the inter-cell L1/L2 mobility. The serving cell set in the UE can be maintained. The source cell before the inter-cell L1/L2 mobility may not be the serving cell after the inter-cell L1/L2 mobility. For example, a source cell with poor reception quality before the inter-cell L1/L2 mobility may be released from the serving cell. The target cell after the inter-cell L1/L2 mobility may be the serving cell. CA is enabled using the cell.

Some or all of the serving cells set for the UE by the inter-cell L1/L2 mobility may be released. Some or all of the SCells may be released before inter-cell L1/L2 mobility. Some or all of the source cells and the SCells may be released after the inter-cell L1/L2 mobility. In this way, for example, it is possible to release a cell with poor reception quality before the inter-cell L1/L2 mobility. Preferably, these CA processing methods are performed for each Cell Group (CG). Different methods may be performed in different CGs.

The CU may notify the DU of the CA and/or DC processing method for the case that inter-cell L1/L2 mobility is performed. The CU may notify the UE of the CA and/or DC processing method for the case that inter-cell L1/L2 mobility is performed. The CU may notify the UE via the DU. The DC processing method may be different or the same for each CG. As the notification of the DC processing method, the DC processing method for each CG may be provided. The CA processing method may be different or the same for each serving cell. As the notification of the CA processing method, the processing method for each serving cell may be provided. The information on the processing method may be included in the information related to inter-cell L1/L2 mobility and transmitted. In this way, the CA and/or DC processing can be set. According to the radio wave propagation environment of the UE or the DU and the load situation of cells, it is possible to configure the setting suitable for the UE to be subjected to inter-cell L1/L2 mobility. As another method, the processing method may be statically determined by a standard or the like. Signaling can be reduced.

The processing method of inter-cell L3 mobility when the inter-cell L1/L2 mobility is set will be disclosed. As the inter-cell L3 mobility, Conditional HO (CHO) and Dual Active Protocol Stack (DAPS) may be included (see Non Patent Literature 2). Alternatively, in the case of SCG, as the inter-cell L3 mobility, Conditional PSCell Change (CPC) and Conditional PSCell Addition (CPA) may be included (See Non Patent Literature 2 and Non Patent Literature 22). The CU sets the priority order of inter-cell L3 mobility and inter-cell L1/L2 mobility. The setting of the priority order is transmitted from the CU to the DU. The setting may be included in the information related to inter-cell L1/L2 mobility. According to the radio wave propagation environment of the UE or the DU and the load situation of cells, it is possible to configure the setting suitable for the UE to be subjected to inter-cell L1/L2 mobility. As another method, the priority order may be statically determined by a standard or the like. Signaling can be reduced.

Examples of processing methods of inter-cell L3 mobility when the inter-cell L1/L2 mobility is set are disclosed. Priority is given to inter-cell L3 mobility. When the inter-cell L1/L2 mobility is set and the inter-cell L3 mobility is activated, the UE preferentially executes the inter-cell L3 mobility. When the inter-cell L1/L2 mobility is set for a predetermined UE and the inter-cell L3 mobility is activated, the DU preferentially executes the inter-cell L3 mobility. When the inter-cell L1/L2 mobility is set for a predetermined UE and the inter-cell L3 mobility is activated, the CU preferentially executes the inter-cell L3 mobility. In this way, not the inter-cell mobility by the L1/L2 processing (inter-cell L1/L2 mobility) but the inter-cell mobility by the L3 processing (inter-cell L3 mobility) can be executed. Since inter-cell mobility that involves RRC is enabled, for example, all RRC settings suitable for the target cell are enabled.

Disclosed below are other examples. Priority is given to inter-cell L1/L2 mobility. When the inter-cell L1/L2 mobility is set and the inter-cell L3 mobility is activated, the UE does not execute the cell change by L3 mobility. The inter-cell L1/L2 mobility processing is continued. When the inter-cell L1/L2 mobility is set for a predetermined UE and the inter-cell L3 mobility is activated, the DU does not execute the cell change by L3 mobility. The inter-cell L1/L2 mobility processing is continued. When the inter-cell L1/L2 mobility is set for a predetermined UE and the inter-cell L3 mobility is activated, the CU does not execute the cell change by L3 mobility. The inter-cell L1/L2 mobility processing is continued. In this way, inter-cell mobility by L1/L2 processing can be executed. Mobility can be executed early for the target cell.

The CU may transmit, to the DU, information on whether to continue the inter-cell L1/L2 mobility when the inter-cell L1/L2 mobility is set and the inter-cell L3 mobility is activated. The CU may transmit the information to the UE. The CU may transmit the information to the UE via the DU. The item may be included in the information related to inter-cell L1/L2 mobility and transmitted. For example, in a case where priority is given to the inter-cell L3 mobility, the inter-cell L1/L2 mobility may not be continued. In this case, when the inter-cell L3 mobility occurs, the inter-cell L3 mobility is preferentially executed, and the inter-cell L1/L2 mobility is not continued. For example, in a case where priority is given to the inter-cell L3 mobility, the inter-cell L1/L2 mobility may be continued. In this case, preferably, when the inter-cell L3 mobility occurs, the inter-cell L3 mobility is preferentially executed, and thereafter the inter-cell L1/L2 mobility is continued. It is possible to perform more flexible setting, to reduce the delay of mobility, to reduce the communication interruption time, and to improve the robustness of mobility.

After inter-cell L1/L2 mobility, a new GPRS Tunnelling Protocol-Tunnel Endpoint Identifier (GTP-TEID) may be used for communication between the CU and the DU. The CU transmits the GTP-TEID between the CU and the DU after the inter-cell L1/L2 mobility to the DU. The item may be included in the information related to inter-cell L1/L2 mobility and transmitted. The item may be included in UP Transport Layer Information and transmitted. The DU uses the GTP-TEID for communication between the CU and the DU after inter-cell L1/L2 mobility. The DU may use the GTP-TEID for communication between the CU and the DU even when only the beam is changed by inter-cell L1/L2 mobility. The GTP-TEID that is used for communication between the CU and the DU can be changed before and after inter-cell L1/L2 mobility. The CU may determine that the inter-cell L1/L2 mobility has been executed in response to the DU performing communication using the GTP-TEID. With such a method, it is possible to reduce malfunction in communication between the CU and the DU.

After inter-cell L1/L2 mobility, a new GTP-TEID may not be used for communication between the CU and the DU. Preferably, the GTP-TEID before the inter-cell L1/L2 mobility is continuously used. In this way, the setting information between the CU and the DU can be reduced, and the processing in the CU and the DU can be simplified.

The above methods may be combined. After inter-cell L1/L2 mobility, in the case of only the beam change, a new GTP-TEID is not used for communication between the CU and the DU. The GTP-TEID before the beam change is continuously used. After inter-cell L1/L2 mobility, in the case of not only the beam change, a new GTP-TEID is used for communication between the CU and the DU. In this way, the processing in the CU and the DU in the case of only the beam change can be simplified.

After inter-cell L1/L2 mobility, a new UE identifier may be used for the F1 interface. The CU may transmit, to the DU, a UE identifier to be used in a new F1 interface after inter-cell L1/L2 mobility. The UE identifier may be a UE identifier that is used in the CU. For example, the UE identifier may be gNB-CU UE F1AP ID. The UE identifier may be a UE identifier that is used in the DU. For example, the UE identifier may be gNB-DU UE F1AP ID. Both of them may be transmitted. The UE identifier that is used in the F1 interface may be included in the information related to inter-cell L1/L2 mobility and transmitted. Consequently, it is possible to identify the UE to be subjected to inter-cell L1/L2 on the F1 interface between the CU and the DU.

The DC transmits information related to inter-cell L1/L2 mobility to the UE. The information related to inter-cell L1/L2 mobility that is transmitted from the DU to the UE may be a part or all of the information related to inter-cell L1/L2 mobility that is transmitted from the CU to the DU. Among the information related to inter-cell L1/L2 mobility, the information related to the candidate cell may be information related to one or more candidate cells of the candidate cells determined by the CU or the DU. The information related to the beam may be information related to one or more beams in the cell. The DU may notify the UE of the CA and/or DC processing method for the case that inter-cell L1/L2 mobility is performed. The DU may notify the UE of the setting of the priority order of inter-cell L3 mobility and inter-cell L1/L2 mobility. These may be included in the information related to inter-cell L1/L2 mobility and transmitted.

The UE configures the RLC setting and/or MAC setting and/or PHY setting in the candidate cell and/or the bearer in receiving the information related to the candidate cell and/or the information related to the bearer. The UE maintains the setting of the candidate cell and/or the bearer until the setting is released.

The RLC setting and/or MAC setting and/or PHY setting in the candidate cell and/or the bearer may be the same as before the inter-cell L1/L2 mobility. In such a case, the RLC setting and/or MAC setting and/or PHY setting in the candidate cell and/or the bearer may not be transmitted to the UE. As another method, information indicating that the setting is the same as before the inter-cell L1/L2 mobility may be transmitted to the UE. In this way, the setting process can be simplified.

Preferably, the RRC message is used for notification of the information related to inter-cell L1/L2 mobility from the DU to the UE. A new message may be provided for the notification. As another method, an existing message may be used. For example, RRCReconfiguration may be used. By using an existing message, it is possible to avoid complication of the process of transmitting the information.

MAC signaling may be used for notification of the information related to inter-cell L1/L2 mobility from the DU to the UE. For example, the information may be included in the MAC CE and transmitted. This enables early transmission. L1/L2 signaling may be used for notification of the information related to inter-cell L1/L2 mobility from the DU to the UE. For example, the information may be included in the DCI and transmitted. The item may be included in the PDCCH and transmitted. This enables earlier transmission.

For notification of the information, RRC, MAC, and L1/L2 signaling may be used in combination. For example, information that may be semi-static such as setting information and information with a large amount of information may be transmitted by RRC signaling, and information that may be dynamic such as instruction information and information with a small amount of information may be transmitted by MAC signaling or L1/L2 signaling. For example, information related to the candidate cell and information related to the bearer are included in the RRC message and transmitted by RRC signaling, and the instruction information and the cancellation information of the inter-cell L1/L2 mobility are included in the MAC CE or the DCI and transmitted by MAC signaling or PDCCH. In this way, it is possible to perform efficient transmission suitable for each transmission method.

The gNB may set activation/deactivation (act/deact) of the candidate cell. The gNB notifies the UE of the act/deact of the candidate cell. The CU may configure the setting. Notification of the act/deact of the candidate cell is provided from the CU to the DU and from the DU to the UE. The notification may be included in the RRC message. F1 signaling may be used for notification from the CU to the DU. RRC signaling may be used for notification from the DU to the UE. The UE receives the PDCCH of the activated candidate cell. The UE may perform L1 measurement on the activated candidate cell. The UE may perform both the reception of the PDCCH and the L1 measurement of the activated candidate cell. In this way, the candidate cell setting and the act/deact of the candidate cell can be separately performed. For example, the CU transmits, to the UE, the act/deact of the candidate cell after transmitting the candidate cell setting. The UE performs only the setting through candidate setting, and performs the L1 measurement on the candidate cell upon receiving act. Upon receiving deact, the L1 measurement of the candidate cell is not performed. In this way, power saving of the UE can be achieved.

The DU may set the act/deact of the candidate cell. Notification of the act/deact of the candidate cell is provided from the DU to the UE. The notification may be transmitted by MAC signaling. For example, the notification may be included in the MAC CE and transmitted. This enables early transmission. The act/deact of the candidate cell may be transmitted by L1/L2 signaling. The item may be included in the DCI and transmitted. The item may be included in the PDCCH and transmitted. This enables earlier transmission. The above-described effect can be obtained. In addition, since the act/deact of the candidate cell can be provided as notification early, dynamic control can be performed. The UE can receive the PDCCH of the target candidate cell early. The TCI state (TCI-State) from the target candidate cell can be received early. Therefore, inter-cell L1/L2 mobility can be executed with a lower delay.

The act/deact setting of the candidate cell may be included in the information related to inter-cell L1/L2 mobility from the CU to the DU or from the DU to the UE and transmitted. The act/deact setting may be transmitted together with the information related to the candidate cell or by being included in the information related to the candidate cell. In this way, it is possible to control whether the setting of the candidate cell is set to act or deact. Flexible setting of the candidate cell is possible.

A default act/deact setting may be determined for the candidate cell. The default act/deact setting may be statically determined by a standard or the like. Preferably, the default setting is applied if the act/deact setting is not sent. For example, when only the setting of the candidate cell is received, the candidate cell is set to deact. Alternatively, the candidate cell may be set to act. When the act/deact setting is received, the setting is followed. In this way, the amount of information signaled can be reduced. In addition, the act/deact processing of the candidate cell can be simplified.

The relationship between the act/deact setting of the candidate cell and the act/deact setting of the serving cell will be disclosed. The act/deact setting of the candidate cell and the act/deact setting of the serving cell are independent. For example, if cell #1 is set to act as a candidate cell and to deact as a serving cell, the UE performs activation processing with cell #1 as a candidate cell and deactivation processing as a serving cell. As the activation processing as a candidate cell, the UE performs PDCCH reception and/or L1 measurement for inter-cell L1/L2 mobility. For example, if cell #2 is set to deact as a candidate cell and to act as a serving cell, the UE performs deactivation processing with cell #2 as a candidate cell and activation processing as a serving cell. As the activation processing as a serving cell, the UE performs PDCCH reception for the serving cell. In this way, each setting can be configured independently. Flexible setting is possible.

If the candidate cell is a serving cell, the act/deact setting of the candidate cell and the act/deact setting of the serving cell can be different. Preferably, any of the settings is prioritized. For example, the act/deact setting of the candidate cell is prioritized. For example, the act/deact setting of the serving cell is prioritized. For example, the setting provided as notification later is prioritized. These may be statically determined by a standard or the like. It is possible to reduce malfunction of the act/deact processing.

Another method will be disclosed regarding the relationship between the act/deact setting of the candidate cell and the act/deact setting of the serving cell. The act/deact setting of the candidate cell and the act/deact setting of the serving cell may be interlocked. For example, if the cell is both a candidate cell and a serving cell, the act/deact setting of the candidate cell and the act/deact setting of the serving cell may be the same. For example, if any act/deact setting is configured for the cell, the act/deact setting is followed both as the candidate cell and as the serving cell. In this way, the act/deact processing can be simplified.

The gNB configures the setting of L1 measurement for inter-cell L1/L2 mobility for the UE. The gNB notifies the UE of the L1 measurement setting for inter-cell L1/L2 mobility. The gNB may be a CU. The CU notifies the DU of the L1 measurement setting for inter-cell L1/L2 mobility. The DU notifies the UE of the L1 measurement setting for inter-cell L1/L2 mobility. Notification of the setting may be included in the RRC message. F1 signaling may be used for notification from the CU to the DU. RRC signaling may be used for notification from the DU to the UE.

The L1 measurement setting for inter-cell L1/L2 mobility may include some or all of the identifier of the UE, the setting information of the resource to be measured, the reception quality type information to be measured, and the report setting information of the measurement result. The identifier of the UE is information for identifying the UE that is caused to perform the L1 measurement for inter-cell L1/L2 mobility. For example, the identifier may be a radio network temporary identifier (RNTI). An example of the setting information of the resource to be measured is information of the cell to be measured. Another example is information of the beam to be measured. Another example is setting information of the CSI-RS to be measured and/or setting information of the SSB to be measured. Another example is the identifier of the DU constituting the cell to be measured. The reception quality type information to be measured includes types of RSRP, RSRQ, and SINR. The report setting information of the measurement result includes information on which resource and which reception quality type of measurement result is to be reported. The report setting information of the measurement result may include information indicating whether the report is periodic or aperiodic. In the periodic case, there may be information of the period and/or offset. In the aperiodic case, there may be information indicating the timing to perform measurement, for example, offset information. The report setting information of the measurement result may include uplink physical channel information that is used for reporting. Examples of this may include information indicating that PUCCH and/or PUSCH is used for reporting, and resource information of PUCCH and/or PUSCH.

Information of the cell for which L1 measurement for inter-cell L1/L2 mobility is performed includes the cell identifier. The cell identifier may be a PCI. The cell identifier may be the identifier of the serving cell. The cell identifier may be the candidate cell identifier. The cell for which L1 measurement for inter-cell L1/L2 mobility is performed may be some or all of the candidate cells. The identifier of each cell may be associated with other information such as setting information of the resource to be measured in each cell.

Information for identifying the L1 measurement setting for inter-cell L1/L2 mobility, e.g., an identifier, may be provided. The information may be associated with the L1 measurement setting for inter-cell L1/L2 mobility or included in the L1 measurement setting for inter-cell L1/L2 mobility. The identifier may be set so as not to overlap in one DU, or may be set so as not to overlap between one or more DUs. For example, the identifier may be set so as not to overlap in one CU. This is effective, for example, in a case where a plurality of L1 measurement settings for inter-cell L1/L2 mobility are configured on the UE. Preferably, the UE includes information identifying the L1 measurement setting in the L1 measurement result report. The DU or the CU can recognize which L1 measurement setting the measurement result correlates to. For example, it is also effective to make it possible for the DU to identify the L1 measurement setting for inter-cell L1/L2 mobility to the UE.

The L1 measurement setting for inter-cell L1/L2 mobility may be configured for each candidate cell after the candidate cell is determined. The L1 measurement setting for inter-cell L1/L2 mobility set for the candidate cell may be referred to as the L1 measurement setting of the candidate cell. The DU that has received the L1 measurement setting of the candidate cell configures the L1 measurement setting of the candidate cell. In the DU, for example, transmission setting such as CSI-RS and SSB for L1 measurement of the candidate cell is configured. The UE that has received the L1 measurement setting of the candidate cell configures the L1 measurement setting of the candidate cell. In the UE, for example, reception setting such as CSI-RS and SSB for L1 measurement of the candidate cell is configured.

Preferably, the RRC message is used for transmission of the setting information of L1 measurement for inter-cell L1/L2 mobility. A new message may be provided for the transmission. By using the RRC message, for example, a large amount of information can be transmitted, and thus L1 measurement results of a large number of candidate cells can be transmitted. An existing message may be used as the RRC message. For example, the setting information may be included in CSI-MeasConfig and transmitted. The report setting information of the measurement result may be included in, for example, reportQuantity and transmitted. In this way, it is possible to avoid complication of the process of transmitting the setting information of L1 measurement for inter-cell L1/L2 mobility.

RA processing may be used to report the measurement result. 2-step RACH may be used.

The setting information of L1 measurement for inter-cell L1/L2 mobility may be transmitted separately from the information related to inter-cell L1/L2 mobility. As another method, the setting information of L1 measurement for inter-cell L1/L2 mobility may be included in the information related to inter-cell L1/L2 mobility and transmitted. For example, the setting information may be included in the setting of the candidate cell and transmitted. For example, the setting information may be included in ServingCellConfig of the candidate cell and transmitted.

The UE performs L1 measurement according to the received L1 measurement setting for inter-cell L1/L2 mobility. The cell on which the L1 measurement is performed may be limited to the activated candidate cell. The UE performs L1 measurement according to the received L1 measurement setting for inter-cell L1/L2 mobility, and reports the measurement result (L1 measurement result).

The L1 measurement setting for inter-cell L1/L2 mobility and the L1 measurement setting for L1/L2 mobility configured in the conventional serving cell may be separate. The UE may be notified of each setting separately.

A method for reporting the L1 measurement result for inter-cell L1/L2 mobility will be disclosed. The UE transmits the L1 measurement result of each candidate cell to the candidate cell. Disclosed below are other methods. A cell (referred to as a PUCCH candidate cell) in which PUCCH is set may be provided in the candidate cell. A PUCCH cell group may be provided in the candidate cell. One PUCCH cell group may be provided in each DU. Three or more PUCCH cell groups may be constituted. One cell (PUCCH candidate cell) in which PUCCH is configured may be provided in the PUCCH cell group. The PUCCH candidate cell may be constantly activated (act). The UE transmits the L1 measurement result of the candidate cell to the PUCCH candidate cell. The UE may transmit the L1 measurement result of the candidate cell to the PUCCH candidate cell of the PUCCH cell group to which the candidate cell belongs. In this way, the UE can report the L1 measurement result for inter-cell L1/L2 mobility to the gNB. The gNB can acquire the L1 measurement result for inter-cell L1/L2 mobility from the UE. The gNB may be a CU or a DU.

Disclosed below are other methods. The UE transmits the L1 measurement results of all candidate cells to the PCell of the source. In the case of MCG, the UE transmits the L1 measurement results of all candidate cells to the PCell. The PCell may be the PCell of the source of inter-cell L1/L2 mobility. In the case of SCG, the UE transmits the L1 measurement results of all candidate cells to the PSCell. The PSCell may be the PSCell of the source of inter-cell L1/L2 mobility. In the case of the SCG, the PSCell is changed. In this way, the process of reporting the L1 measurement result for inter-cell L1/L2 mobility can be facilitated.

Disclosed below are other methods. The UE may transmit the L1 measurement results of all candidate cells to the PUCCH SCell. The UE may transmit the L1 measurement results of all candidate cells to a cell (PCell, PSCell, or PUCCH SCell) in which one PUCCH is set in the PUCCH group to which the candidate cell belongs. Three or more PUCCH SCells may be constituted. One PUCCH SCell may be provided in each DU. For example, this is preferably used when the candidate cell is a serving cell. The process of reporting the L1 measurement result for inter-cell L1/L2 mobility and the process of reporting the measurement result of the serving cell can be made the same, and these processes can be simplified.

Disclosed below are other methods. The UE transmits the L1 measurement result for inter-cell L1/L2 mobility of each candidate cell to a cell that belongs to the same timing advance group (TAG). In this way, uplink timing adjustment between the UE and the cell becomes unnecessary.

As the UE transmits the L1 measurement result for inter-cell L1/L2 mobility to a predetermined cell in this manner, even in a case where the candidate cell is not a serving cell, the L1 measurement result for inter-cell L1/L2 mobility can be transmitted to the DU. The DU can receive the L1 measurement result for inter-cell L1/L2 mobility.

Disclosed below are nine examples of information included in the L1 measurement result for inter-cell L1/L2 mobility of the candidate cell.
(1) Identifier of candidate beam.
(2) Identifier of candidate cell.
(3) Serving cell identifier of candidate cell.
(4) Identifier of candidate DU.
(5) Measured resource information.
(6) Reception quality type information.
(7) L1 measurement result information.
(8) Identifier of UE.
(9) Combinations of (1) to (8).

Item (1) may be, for example, CRI or SSBRI which is information indicating the identifier of CSI-RS or SSB. Item (2) may be the candidate cell identifier. Item (3) may be ServCellIndex. Item (5) may be, for example, CSI-RS or SSB. Item (5) may be the identifier of CSI-RS or the identifier of SSB. Item (6) may be, for example, RSRP, RSRQ, SINR, or the like. Item (7) is, for example, the measurement result by L1 measurement such as RSRP, RSRQ, or SINR. Item (8) is information for identifying the UE that transmits the L1 measurement result of the candidate cell.

A method for transmitting the L1 measurement result for inter-cell L1/L2 mobility will be disclosed. The L1 measurement result may be transmitted by PUCCH and/or PUSCH. The L1 measurement result may be included in the CSI or transmitted together with the CSI. A conventional CSI report transmission method may be used for the transmission. Preferably, the information disclosed above is included in the CSI report. It is possible to avoid complication of the transmission processing. In this way, the L1 measurement result for inter-cell L1/L2 mobility can be transmitted.

The UE may perform uplink synchronization processing with the candidate cell. The UE may perform uplink synchronization processing with some cells of the candidate cells. The UE may perform uplink synchronization processing with the cell of the transmission destination of the L1 measurement result for inter-cell L1/L2 mobility. The UE may perform uplink synchronization processing with the candidate cell that transmits the L1 measurement result for inter-cell L1/L2 mobility. The UE may perform uplink synchronization processing with the PUCCH candidate cell. The uplink synchronization processing may be performed on a cell for which uplink synchronization has not been obtained.

The UE may perform uplink synchronization processing with the cell to which the L1 measurement result for inter-cell L1/L2 mobility is transmitted before transmitting the L1 measurement result for inter-cell L1/L2 mobility. The UE may perform uplink synchronization processing with the cell to which the L1 measurement result for inter-cell L1/L2 mobility is transmitted when transmitting the L1 measurement result for inter-cell L1/L2 mobility. The cell with which uplink synchronization processing is performed can be limited to the PUCCH candidate cell for the candidate cell to which the L1 measurement result needs to be reported.

The UE may perform uplink synchronization processing with the PUCCH candidate cell before starting the L1 measurement for inter-cell L1/L2 mobility of the candidate cell. Upon receiving the setting information of the candidate cell, the UE may perform uplink synchronization processing with the PUCCH candidate cell. By performing the uplink synchronization processing with the PUCCH candidate cell in advance, the L1 measurement result can be reported earlier after the L1 measurement for inter-cell L1/L2 mobility is performed.

A method with which the UE performs uplink synchronization processing with a candidate cell will be disclosed. The UE transmits the PRACH to the candidate cell. The candidate cell that has received the PRACH transmits timing advance (TA) to the UE. In this way, the UE can perform uplink synchronization with the candidate cell. The UE can acquire the TA that is used for uplink transmission to the candidate cell. The UE performs uplink transmission to the candidate cell by using the TA.

In this way, when the UE reports the L1 measurement result for inter-cell L1/L2 mobility, even though there may be a case where the UE is not in uplink synchronization with the transmission destination cell, the UE can perform uplink synchronization with the transmission destination cell, and the L1 measurement result for inter-cell L1/L2 mobility can be reported.

The gNB may notify the UE of the offset of the TA for each candidate cell in advance. The candidate cell may be the PUCCH candidate cell. The notification may be given from the CU to the DU. The notification may be given from the DU to the UE. The UE may perform uplink synchronization processing on the candidate cell with unknown TA or TAG. The offset of the TA for each candidate cell may be included in the RRC message and transmitted. F1 signaling may be used for the transmission from the CU to the DU, and RRC signaling may be used for the transmission from the DU to the UE. MAC signaling may be used as a method of transmitting the offset of the TA for each candidate cell from the DU to the UE. For example, the offset may be included in the MAC CE. This enables early transmission. Alternatively, the offset of the TA for each candidate cell may be transmitted by L1/L2 signaling. For example, the offset may be included in the DCI. The offset may be transmitted on the PDCCH. This enables earlier transmission. For example, this is effective in a case where TA is dynamically set for the UE.

The gNB determines, for the UE, a candidate cell for the inter-cell L1/L2 mobility destination. The candidate cell for the inter-cell L1/L2 mobility destination may be referred to as a target cell or a T-PCell. The gNB determines, for the UE, the target beam of the target cell on which inter-cell L1/L2 mobility is performed. The gNB may be the DU. For example, the determination may be made in MAC. The DU may determine the target cell and/or the target beam by using the L1 measurement result for inter-cell L1/L2 mobility received from the UE. The determination by the DU enables early determination of the target cell and/or the target beam after the L1 measurement result for inter-cell L1/L2 mobility is received. Inter-cell L1/L2 mobility can be executed with a low delay.

Processing of RLC, MAC, and PHY protocols in the DU and the UE after inter-cell L1/L2 mobility will be disclosed. The UE does not need to reset the RLC after inter-cell L1/L2 mobility. The reconfiguration of the RLC may be unnecessary. The release of the RLC may be unnecessary. The DU may perform similar processing. Preferably, the DU continues the RLC setting received from the CU. Preferably, the UE continues the RLC setting received from the CU. Alternatively, the UE preferably continues the RLC setting received from the DU. RLC setting processing is facilitated. The setting of the DU may not be changed in the inter-cell L1/L2 mobility in the DU.

If the RLC setting after the inter-cell L1/L2 mobility is different from the RLC setting before the inter-cell L1/L2 mobility, the DU preferably uses the RLC setting after the inter-cell L1/L2 mobility. If the RLC setting after the inter-cell L1/L2 mobility is different from the RLC setting before the inter-cell L1/L2 mobility, the UE preferably uses the RLC setting after the inter-cell L1/L2 mobility. Flexible setting is possible before and after mobility. Also in such a case, the reset of the RLC may be unnecessary. The reconfiguration of the RLC may be unnecessary. The release of the RLC may be unnecessary.

In this way, the time required for the RLC setting processing can be reduced.

The UE does not need to reset the MAC after inter-cell L1/L2 mobility. The reconfiguration of the MAC may be unnecessary. The release of the MAC may be unnecessary. The DU may perform similar processing. Preferably, the DU continues the MAC setting received from the CU. Preferably, the UE continues the MAC setting received from the CU. Alternatively, the UE preferably continues the MAC setting received from the DU. The setting of the DU may not be changed in the inter-cell L1/L2 mobility in the DU.

If the MAC setting after the inter-cell L1/L2 mobility is different from the MAC setting before the inter-cell L1/L2 mobility, the DU preferably uses the MAC setting after the inter-cell L1/L2 mobility. If the MAC setting after the inter-cell L1/L2 mobility is different from the MAC setting before the inter-cell L1/L2 mobility, the UE preferably uses the MAC setting after the inter-cell L1/L2 mobility. Also in such a case, the reset of the MAC may be unnecessary. The reconfiguration of the MAC may be unnecessary. The release of the MAC may be unnecessary.

In this way, the time required for the MAC setting processing can be reduced.

The UE does not need to reset the PHY after inter-cell L1/L2 mobility. The reconfiguration of the PHY may be unnecessary. The release of the PHY may be unnecessary. The DU may perform similar processing. Preferably, the DU continues the PHY setting received from the CU. Preferably, the UE continues the PHY setting received from the CU. Alternatively, the UE preferably continues the PHY setting received from the DU. The setting of the DU may not be changed in the inter-cell L1/L2 mobility in the DU.

If the PHY setting after the inter-cell L1/L2 mobility is different from the PHY setting before the inter-cell L1/L2 mobility, the DU preferably uses the PHY setting after the inter-cell L1/L2 mobility. If the PHY setting after the inter-cell L1/L2 mobility is different from the PHY setting before the inter-cell L1/L2 mobility, the UE preferably uses the PHY setting after the inter-cell L1/L2 mobility. Also in such a case, the reset of the PHY may be unnecessary. The reconfiguration of the PHY may be unnecessary. The release of the PHY may be unnecessary.

In this way, the time required for the PHY setting processing can be reduced.

Processing of the PDCP protocol in the CU and the UE after inter-cell L1/L2 mobility will be disclosed. The UE does not need to reset the PDCP after inter-cell L1/L2 mobility. The reestablishment of the PDCP may be unnecessary. The release of the PDCP may be unnecessary. The PDCP setting after the inter-cell L1/L2 mobility may be the same as the PDCP setting before the inter-cell L1/L2 mobility. The PDCP setting may be continued before and after the inter-cell L1/L2 mobility. The CU may perform similar processing. In this way, the PDCP setting processing is facilitated. In addition, it is possible to make the protocol setting processing by the CU unnecessary in the inter-cell L1/L2 mobility processing.

The protocol processing disclosed above may be applied for each bearer type. For example, the protocol processing is applied to both the data radio bearer (DRB) and the signaling radio bearer (SRB). For example, the protocol processing may be applied to the DRB and not applied to the SRB. For example, the protocol processing may be applied to the SRB and not applied to the DRB. For example, the protocol processing may be applied to the SRB0 and the SRB1 among the SRBs, and not applied to the other SRBs. Flexible control can be performed according to the type of bearer.

In the inter-cell L1/L2 mobility, the bearer may not be changed. In this way, it is possible to avoid complication of inter-cell mobility control.

Information indicating an instruction to reset each protocol of RLC, MAC, and PHY set in the cell (source cell) before inter-cell L1/L2 mobility may be provided. Information indicating a reset instruction may be provided for each protocol. Information indicating an instruction to discard the setting of each protocol may be provided. The information may be transmitted from the CU to the DU. The information may be transmitted to the UE. The information may be transmitted from the DU to the UE. The DU or the UE that has received the information may reset each protocol of RLC, MAC, and PHY set in the source cell or discard the setting of each protocol. In this way, it is possible to prevent the setting of the source cell from being configured and prevent the information from being kept after inter-cell L1/L2 mobility.

A new message may be provided for transmission of the information. F1 signaling may be used from the CU to the DU, and RRC signaling may be used from the DU to the UE. An existing message may be used for transmission of the information. For example, UE CONTEXT MODIFICATION REQUEST, UE CONTEXT RELEASE REQUEST (gNB-DU initiated), UE CONTEXT RELEASE COMMAND (gNB-CU initiated), or the like may be used. It is possible to avoid complication of the processing.

A processing method for the identifier of the serving cell in inter-cell L1/L2 mobility will be disclosed. In the case of using the identifier of the serving cell as the identifier of the candidate cell, there may be a problem that the identifier of the cell is redundantly allocated due to a cell change by the inter-cell L1/L2 mobility. Conventionally, zero is always allocated to the identifier (ServCellIndex) of the serving cell of the PCell. Due to the change of the PCell by the inter-cell L1/L2 mobility, both the identifier of the serving cell of the source cell before the inter-cell L1/L2 mobility and the identifier of the serving cell of the target cell after the inter-cell L1/L2 mobility become zero. In this manner, there arises a problem that the identifier zero of the serving cell is redundantly allocated. Disclosed below is a method for solving such a problem.

The identifier (ServCellIndex) of the serving cell is changed before and after inter-cell L1/L2 mobility. A method of making the change will be disclosed. The identifier (ServCellIndex) of each serving cell for the case that each candidate cell is selected is provided as notification. The serving cell identifier (ServCellIndex) of another PSCell or SCell (including S-PCell) for the case that the identifier (ServCellIndex) of the serving cell of the candidate cell becomes zero is provided as notification. Preferably, the setting is configured for all candidate cells and provided as notification. As the setting of each serving cell, only the identifier (ServCellIndex) of the serving cell may be changed, and other settings may not be changed. In this way, it is possible to avoid redundant allocation of zero to the serving cell identifier before and after inter-cell L1/L2 mobility. It is possible to reduce occurrence of malfunction due to inter-cell L1/L2 mobility.

The identifier (ServCellIndex) of each serving cell for the case that each candidate cell is selected may be transmitted from the CU to the DU in advance. The identifier may be transmitted from the CU to the UE. The identifier may be transmitted from the DU to the UE. The identifier may be included in the information related to the candidate cell. The identifier may be included in the information related to inter-cell L1/L2 mobility. By including the identifier in the information, the amount of signaling can be reduced.

Disclosed below are other methods. The serving cell identifier (ServCellIndex) of the candidate cell (target cell) selected by the inter-cell L1/L2 mobility is allocated to the PCell before the inter-cell L1/L2 mobility. Consequently, the serving cell identifier of the PCell before the inter-cell L1/L2 mobility becomes the serving cell identifier of the candidate cell to be the target cell. In addition, the target cell becomes the PCell, and the serving cell identifier (ServCellIndex) becomes zero. In this way, it is possible to avoid redundant allocation of zero to the serving cell identifier before and after inter-cell L1/L2 mobility. Since it is not necessary to give notification of the identifier of each serving cell for the case that each candidate cell is selected, the amount of information to be signaled can be reduced.

Disclosed below are other methods. When the cell is changed by inter-cell L1/L2 mobility, identifiers (ServCellIndex) of some or all of the serving cells including the candidate cell are reconfigured. The reconfiguration method may be statically determined by a standard or the like. The reconfiguration method may be transmitted from the CU to the DU in advance. When the cell is changed by inter-cell L1/L2 mobility, the DU or the UE reconfigures the serving cell identifier by using the reconfiguration method. As the reconfiguration method, for example, renumbering may be performed in ascending order of the PCI of the cell. The serving cell identifier after the cell change by the inter-cell L1/L2 mobility may be reconfigured in the serving cell identifier before the cell change by the inter-cell L1/L2 mobility. In this way, the setting for the serving cell becomes clear, and thus it is possible to reduce the occurrence of malfunction.

When the cell is changed by the inter-cell L1/L2 mobility, the identifier of the serving cell including the target cell may be reconfigured. The identifier may be determined by the CU. The identifier is transmitted from the CU to the DU. The identifier may be transmitted from the CU to the UE. The identifier may be transmitted from the DU to the UE. The identifier may be transmitted from the source cell to the UE. The identifier can be transmitted to the UE early, and the UE can set the identifier early. The identifier may be transmitted from the target cell to the UE. The UE can reduce malfunction by receiving the identifier after determining the target cell.

The identifier may be reconfigured by the DU. The identifier may be transmitted from the DU to the UE. MAC signaling may be used for the transmission. For example, the identifier may be included in the MAC CE and transmitted. Alternatively, L1/L2 signaling may be used. For example, the identifier may be included in the DCI and transmitted on the PDCCH. In this way, reconfiguration can be performed early for the UE. The identifier may be transmitted from the DU to the CU. Preferably, F1 signaling is used for the transmission. Upon receiving the identifier, the CU performs reconfiguration to the identifier of the serving cell reconfigured by the DU. In this way, it is possible to match the identifiers of the serving cells among the CU, the DU, and the UE. Therefore, malfunction can be reduced.

Instead of reconfiguring the identifier of the serving cell including the target cell, the identifier may be reconfigured in association with the PCI. Not only the identifier but also PCI information associated with the identifier may be transmitted.

The above-disclosed methods of changing the identifier of the serving cell before and after the inter-cell L1/L2 mobility may be appropriately combined. Flexible control can be performed in the process of changing the identifier of the serving cell.

Another method will be disclosed regarding the processing of the identifier of the serving cell in inter-cell L1/L2 mobility. The candidate cell identifier is provided. In the case of setting the candidate cell identifier, it is not necessary to change the identifier of the serving cell. When the serving cell is changed, the setting of the serving cell is preferably included in the information related to inter-cell L1/L2 mobility. Preferably, the identifier of the serving cell is included in the setting of the serving cell. The identifier may be ServCellIndex. For a case where each candidate cell becomes the target cell after the inter-cell L1/L2 mobility, the setting of the serving cell may be included in the information related to inter-cell L1/L2 mobility. The setting of the serving cell can be configured early. As another method, the setting of the serving cell may be configured after the inter-cell L1/L2 mobility. The setting of the serving cell is configured after the target cell is determined. In this case, it is possible to make the setting information of the serving cell for each candidate cell unnecessary.

In a case where the cell is changed due to inter-cell L1/L2 mobility, the source cell may be set to the SCell. When the source cell is set to the SCell, other settings of the source cell may not be changed. Processing can be facilitated. When the source cell is set to the SCell, other settings of the source cell may be changed. The information related to the candidate cell may include the setting associated with setting the source cell to the SCell. The information related to inter-cell L1/L2 mobility may include the setting associated with setting the source cell to the SCell. It is possible to configure the setting suitable for the situation after mobility.

In a case where the cell is changed due to inter-cell L1/L2 mobility, the source cell is not set to the SCell. The source cell is not set to the serving cell. When the cell is changed due to the inter-cell L1/L2 mobility, the serving cell identifier is not allocated to the source cell. In the inter-cell L1/L2 mobility, when the serving cell identifier is not allocated to the source cell, the source cell may not be set to the SCell. In this way, it is possible to avoid complication of inter-cell L1/L2 mobility processing.

The gNB may configure the setting as to whether to set the source cell to the SCell in the inter-cell L1/L2 mobility. The CU may configure the setting and notify the DU. The DU may notify the UE of the setting. Alternatively, the DU may configure the setting and notify the UE. Preferably, RRC signaling is used for the notification. The setting may be included in the information related to inter-cell L1/L2 mobility. The setting may be given as notification together with the information related to the candidate cell. As another method, the setting may be given as notification together with the L1 measurement setting, for example, CSI-MeasConfig. The DU may notify the CU of the setting. Preferably, F1 signaling is used for the notification. In this way, the processing of the source cell in the inter-cell L1/L2 mobility can be flexibly set according to the situation of the UE, the situation of the DU, and the radio wave propagation situation.

The CU does not recognize L1/L2 mobility. Without any measure, the CU similarly does not recognize L1/L2 mobility even in the inter-cell L1/L2 mobility. Therefore, after the inter-cell L1/L2 mobility, the RRC setting configured by the CU may not operate normally. Disclosed below is a method for solving such a problem.

The DU transmits, to the CU, information related to the cell change by the inter-cell L1/L2 mobility. Hereinafter, the information may be referred to as information related to the cell change. When the DU determines the cell change, the information related to the determined target cell may be included in the information related to the cell change. Disclosed below are 11 examples of information related to the cell change.
(1) Information indicating that cell change has been determined.
(2) Identifier of target DU (T-DU).
(3) Identifier of target cell.
(4) Identifier of target beam.
(5) Identifier of source DU (S-DU)
(6) Identifier of source cell.
(7) Identifier of source beam.
(8) L1 measurement result.
(9) Identifier of UE.
(10) Some or all of information included in RRCReconfigurationComplete received by DU from UE.
(11) Combinations of (1) to (10).

Item (8) L1 measurement result may be some or all of the information included in the L1 measurement result for inter-cell L1/L2 mobility disclosed above. Item (9) is information for identifying the UE to be subjected to inter-cell L1/L2 mobility.

F1 signaling may be used for transmission of information related to the cell change by the inter-cell L1/L2 mobility from the DU to the CU. A new message may be provided for the transmission. Alternatively, an existing message may be used. For example, a message for transmitting an RRC message from the UE may be used. For example, UL RRC MESSAGE TRANSFER (RRCReconfigurationcomplete) may be used. Such a message may also be used when the UE determines to change the cell. For example, a message for transmitting only a message from the DU to the CU may be used. For example, ACCESS SUCCESS may be used. The message can be used when the UE does not determine to change the cell.

In this way, the CU can recognize that the inter-cell L1/L2 mobility has been performed. For example, the CU can recognize the target cell after inter-cell L1/L2 mobility, and can configure the RRC setting with the target cell being the PCell. Consequently, it is possible to reduce malfunction of the RRC setting configured by the CU after the inter-cell L1/L2 mobility.

The CU may transmit the RRC setting with the target cell being the PCell to the DU. The CU may transmit the RRC setting with the target cell being the PCell to the UE via the DU. For example, an RRC message may be used for the transmission. For example, RRCReconfiguration may be used. F1 signaling may be used from the CU to the DU. RRC signaling may be used from the DU to the UE. In this way, the common RRC setting can be recognized among the CU, the DU, and the UE. It is possible to reduce malfunction after inter-cell L1/L2 mobility.

The DU may transmit some or all of the information related to the cell change to the UE. For example, information related to the target cell may be transmitted. Preferably, MAC signaling is used for transmission of the information. For example, the information may be included in the MAC CE and transmitted. This enables early transmission from the DU to the UE. L1/L2 signaling may be used for transmission of the information. For example, the information may be included in the DCI and transmitted on the PDCCH. This enables earlier transmission from the DU to the UE. In this way, the UE can recognize that the cell has been changed by the inter-cell L1/L2 mobility and the target cell.

A method for transmitting TCI-state information to the UE after the DU determines to change the cell will be disclosed. The gNB transmits the TCI-state information of the target cell from the source cell to the UE. Alternatively, the gNB may transmit the TCI-state information of the target cell from the target cell to the UE. For example, MAC signaling may be used for transmission of the TCI-state information. For example, the information may be included in the MAC CE and transmitted. This enables early transmission from the DU to the UE. L1/L2 signaling may be used for transmission of the information. For example, the information may be included in the DCI and transmitted on the PDCCH. This enables earlier transmission from the DU to the UE.

The DU may transmit, to the UE, the candidate cell identifier given for the candidate cell together with the TCI-state information or by being included in the TCI-state information. The candidate cell identifier of the target cell may be transmitted. The candidate cell identifier may be transmitted together with the TCI-state information transmitted by the MAC CE or by being included in the TCI-state information. The candidate cell identifier may be transmitted together with the TCI-state information transmitted by the DCI. The carrier identifier of the candidate cell may be transmitted together with the TCI-state information transmitted by the DCI. In this way, even when the candidate cell identifier is allocated, it is possible to notify the UE of the target cell after the cell change by the inter-cell L1/L2 mobility.

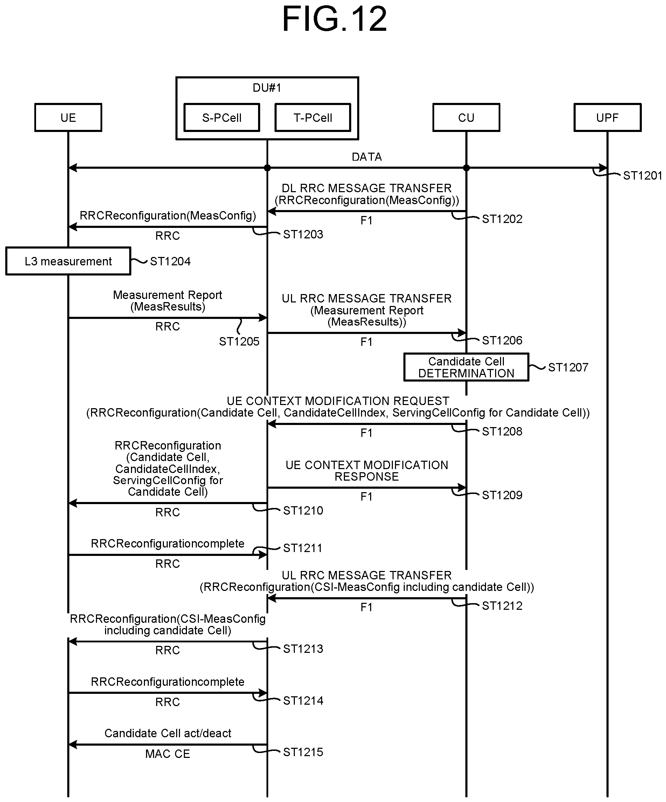

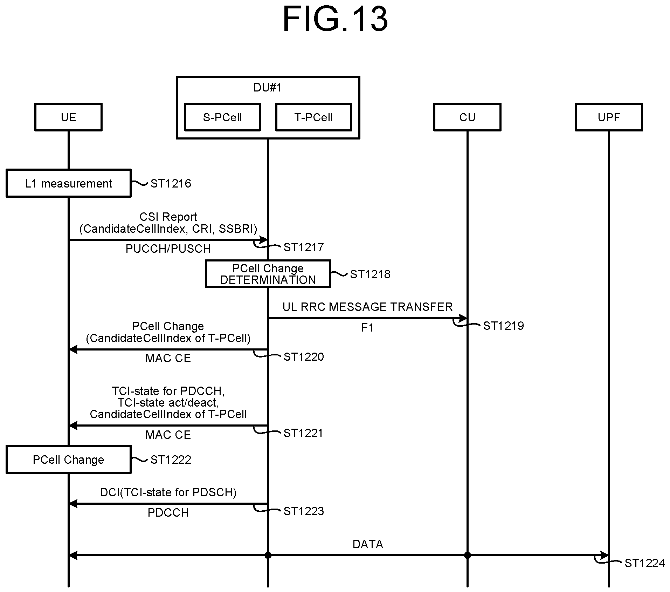

FIGS. 12 and 13 are sequence diagrams illustrating an example of an inter-cell L1/L2 mobility processing method in the DU according to the first embodiment. FIG. 12 illustrates the first half of the sequence, and FIG. 13 illustrates the second half of the sequence. In the example illustrated in FIGS. 12 and 13, the candidate cell is constituted in the same DU as the source cell (S-PCell). In step ST1201, the UE is connected to the source cell of DU#1, and data communication is performed among the source cell of DU#1, the CU, and the UPF. In steps ST1202 and ST1203, the CU transmits the measurement setting to the UE via the DU. In the example illustrated in FIG. 12, the L3 measurement setting is transmitted. In step ST1204, the UE performs L3 measurement using the received measurement setting. In step ST1205, the UE transmits the L3 measurement result to the source cell. In step ST1206, DU#1 constituting the source cell transmits the L3 measurement result received from the UE to the CU.

In step ST1207, the CU determines a candidate cell for inter-cell L1/L2 mobility. In the determination, the CU preferably uses the L3 measurement result received from the UE via DU#1. The number of candidate cells to be determined may be one or more. The candidate cells may include the source cell. Preferably, the CU determines the candidate cell, allocates the candidate cell identifier, and configures the setting of the candidate cell. In step ST1208, the CU notifies the DU of information instructing the UE to execute the inter-cell L1/L2 mobility processing. Preferably, information related to inter-cell L1/L2 mobility is transmitted. Preferably, the information related to inter-cell L1/L2 mobility includes, for example, the identifier of the target UE, the candidate cell identifier to be allocated to the determined candidate cell, the setting of the candidate cell, and the like. For the setting of the candidate cell, for example, information of ServingCellConfig that is used in the RRC message may be used. Consequently, DU#1 can start L1/L2 mobility processing between cells in DU#1 for the UE.

In step ST1209, DU#1 notifies the CU of a response to the inter-cell L1/L2 mobility processing setting instruction. The response may include notification of the completion of the inter-cell L1/L2 mobility processing setting. Whether the inter-cell L1/L2 mobility processing setting is allowed may be included in the response. Preferably, DU#1 transmits a positive response when the setting is allowed. When the setting is not allowed, a rejection response is preferably transmitted. Reason information may be included in the rejection response. In this way, the CU can recognize whether the setting of the candidate cell has been configured in DU#1.

In step ST1210, DU#1 notifies the UE of information instructing the UE to execute the inter-cell L1/L2 mobility processing from the source cell. Preferably, information related to inter-cell L1/L2 mobility is transmitted. Preferably, the information related to inter-cell L1/L2 mobility includes, for example, the candidate cell identifier to be allocated to the determined candidate cell, the setting of the candidate cell, and the like. For the setting of the candidate cell, for example, information of ServingCellConfig that is used in the RRC message may be used. Consequently, the UE can start L1/L2 mobility processing between cells in DU#1.

In step ST1211, the UE notifies the source cell of DU#1 of a response to the inter-cell L1/L2 mobility processing setting instruction. The response may include notification of the completion of the inter-cell L1/L2 mobility processing setting. In this way, DU#1 can recognize whether the setting of the candidate cell has been configured in UE.

DU#1 that has received the response to the inter-cell L1/L2 mobility processing setting instruction from the UE in step ST1211 may notify the CU that the UE has completed the inter-cell L1/L2 mobility processing setting. In this way, the CU can recognize whether the UE has completed the inter-cell L1/L2 mobility processing setting. The signaling in step ST1209 may be used for the notification. The signaling in step ST1209 may include information indicating whether the UE has completed the inter-cell L1/L2 mobility processing setting. The signaling in step ST1209 may be performed after step ST1211. The amount of signaling can be reduced.

In step ST1212, the CU transmits the L1 measurement setting for the inter-cell L1/L2 mobility of the candidate cell to DU#1. Information of CSI-MeasConfig that is used in the RRC message may be used for the transmission. In step ST1213, the source cell of DU#1 transmits, to the UE, the L1 measurement setting for the inter-cell L1/L2 mobility of the candidate cell. In this way, the UE can recognize the L1 measurement setting for the inter-cell L1/L2 mobility of the candidate cell. The UE configures the L1 measurement setting of the candidate cell received from the source cell of DU#1. In step ST1214, the UE that has configured the L1 measurement setting of the candidate cell transmits the L1 measurement setting completion of the candidate cell to the source cell of DU#1. Consequently, DU#1 can recognize that the UE has completed the L1 measurement setting of the candidate cell.

The transmission of the L1 measurement setting for the inter-cell L1/L2 mobility of the candidate cell may be included in the notification of the information instructing the UE to execute the inter-cell L1/L2 mobility processing. Steps ST1208 and ST1210 may include the setting of L1 measurement for the inter-cell L1/L2 mobility of the candidate cell. Signaling in steps ST1212, ST1213, and ST1214 can be reduced. The delay time of the inter-cell L1/L2 mobility processing can be reduced.

DU#1 that has received the response to the L1 measurement setting of the candidate cell from the UE in step ST1214 may notify the CU that the UE has completed the L1 measurement setting of the candidate cell. F1 signaling may be used for the notification. For example, a UL RRC MESSAGE TRANSFER message may be used. In this way, the CU can recognize whether the UE has completed the L1 measurement setting of the candidate cell.

In step ST1215, the source cell of DU#1 transmits the act/deact setting of the candidate cell to the UE. In the example illustrated in FIG. 12, MAC signaling is used. The UE that has received the act/deact setting of the candidate cell performs L1 measurement of the activated candidate cell in step ST1216. By transmitting the act/deact setting of the candidate cell, power consumption of the UE can be reduced.

The notification of the act/deact setting of the candidate cell in step ST1215 may be skipped. In this case, the UE that has received the L1 measurement setting of the candidate cell from the source cell of DU#1 in step ST1213 preferably performs the L1 measurement of all the candidate cells in step ST1216.

In step ST1217, the UE transmits the L1 measurement result of the candidate cell to the source cell. In step ST1218, DU#1 that has received the L1 measurement result of the candidate cell from the UE determines to change the cell for the UE. In the example illustrated in FIG. 13, the change of the PCell is determined.

In step ST1219, DU#1 may notify the CU of the cell change result. As the cell change result, the notification preferably includes information related to the cell change. For example, UL MESSAGE TRANSFER may be used for the notification. In this way, the CU can recognize the change of the cell of the UE.

DU#1 that has determined the cell change of the UE in step ST1218 may notify the UE that the cell has been changed to the target cell in step ST1220 from the source cell. The candidate cell identifier of the target cell may be transmitted in the notification. In the example illustrated in FIG. 13, MAC signaling is used for the notification. By using MAC signaling, DU#1 can transmit information of the determined target cell to the UE for which the cell change has been determined.

In step ST1221, DU#1 transmits the candidate cell identifier of the target cell, the TCI-state information of the target cell, and the act/deact information of the TCI-state from the source cell to the UE. By transmitting the TCI-state information, the UE can recognize the beam that is used in the target cell. In the example illustrated in FIG. 13, MAC signaling is used for the notification. By using MAC signaling, DU#1 can transmit information of the determined target cell and information of the beam in the target cell to the UE for which the cell change has been determined.

In step ST1222, the UE performs the PCell change to the target cell. In step ST1223, DU#1 transmits scheduling information from the target cell using the PDCCH. The UE receives the PDCCH of the target cell using the TCI-state received in step ST1221. In this way, the UE can receive the PDCCH of the beam of the target cell. The UE can acquire the scheduling information.

In step ST1224, the UE can perform data communication among the target cell (PCell after change) of DU#1, the CU, and the UPF.

In this way, the L1 measurement by the UE, the report of the L1 measurement result, and the determination of the cell change in steps ST1216 to ST1218, the notification of the cell change, the notification of the TCI-state information of the target cell, the cell change, and the PDCCH transmission from the beam of the target cell in steps ST1220 to ST1223 can be performed between the UE and DU#1. These can be performed only by the L1/L2 control. Therefore, inter-cell L1/L2 mobility can be executed early.

In the manner disclosed in the first embodiment, the inter-cell mobility processing can be set to L1/L2 mobility. Thus, it is possible to reduce the delay time and the communication interruption time when mobility processing occurs between cells. In the inter-cell mobility processing, the occurrence of connection failure with the target cell can be reduced, and situations in which communication cannot be performed can be reduced.

### Second Embodiment.

The present embodiment discloses a method for performing inter-cell L1/L2 mobility processing including between different DUs.

As an inter-cell L1/L2 mobility processing method including between different DUs, the method disclosed in the first embodiment may be appropriately applied. The second embodiment mainly discloses the processing method for the case that different DUs are included.

In the inter-cell L1/L2 mobility processing including between different DUs, the gNB determines a DU that is a candidate for the target in the inter-cell L1/L2 mobility. Hereinafter, the DU that is a candidate for the target may be referred to as a candidate DU. The number of candidate DUs may be one or more. The gNB determines a cell that is a candidate for the target cell in the inter-cell L1/L2 mobility. The DU constituting the candidate cell may be set as the candidate DU. The gNB may determine a candidate cell from the cells constituted by different DUs. The different DUs may be in the same CU.

In the above description, the node for determining the candidate DU is the gNB. The source gNB (S-gNB) that is the HO source in the inter-cell L1/L2 mobility may perform the determination. The CU of the gNB may determine the candidate DU. For example, the DU subordinate to the CU can be easily set as the candidate DU. By setting more DUs as candidate DUs, more candidate cells can be determined.

A method in which the CU determines a candidate DU will be disclosed. For example, the CU determines a candidate cell from the L3 measurement result. At this time, candidate cells may be determined from the cells constituted by different DUs. The CU determines a DU constituting a candidate cell as a candidate DU. As another method, the CU may determine the candidate DU by using, for example, the load of the DU. For example, a DU having a low load and a margin for UE acceptance may be determined as the candidate DU. In addition, the CU may determine the candidate DU by using, for example, location information or speed information acquired from the UE. For example, a DU close to the location of the UE is determined as a candidate DU. The candidate DU may be determined by using the speed of the UE and considering the location of the UE after mobility. The CU may determine the candidate cell from the cells constituted by the candidate DUs using the L3 measurement result.

In this way, the CU can determine the candidate cell from many DUs.

As another method, the DU of the gNB may determine the candidate DU. For example, the source DU that is the HO source in the inter-cell L1/L2 mobility may determine the candidate DU. Preferably, the DU notifies the CU of the determined candidate DU. When the DU determines a candidate cell, the DU may determine a candidate DU.

A method in which the DU determines a candidate DU will be disclosed. For example, the DU determines a candidate beam from the L1 measurement result. Candidate beams are constituted. At this time, candidate beams may be determined from the beams constituted by cells constituted by different DUs. The DU determines a cell constituting a candidate beam as a candidate cell, and determines a DU constituting a candidate cell as a candidate DU. The DU notifies the CU of the candidate DU. The DU transmits information related to the candidate DU to the CU. The identifier of the candidate DU may be included in the information related to the candidate DU. The DU may transmit information related to the candidate cell and/or information related to the candidate beam to the CU. The DU may transmit, to the CU, information in which the candidate DU, the candidate cell, and the candidate beam are associated.

In this way, the DU can determine the candidate cell from many DUs.

The DU may not determine a candidate DU. When the DU determines a candidate cell, the DU may not determine a candidate DU. The DU may not transmit information related to the candidate DU to the CU. For example, the DU notifies the CU of information related to the determined candidate cell. The CU may determine the candidate DU from the information related to the candidate cell received from the DU. For example, the DU notifies the CU of information related to the determined candidate beam. The CU may determine the candidate cell from the information related to the candidate beam received from the DU, and determine the candidate DU constituting the candidate cell.

In this manner, candidate targets determined by the CU and the DU may differ. For example, the DU may determine a candidate beam, a candidate AP, and a candidate cell, and the CU may determine a candidate DU. In this way, the CU and the DU can flexibly determine the candidate targets.

Once the candidate DU is determined, the CU transmits information related to inter-cell L1/L2 mobility to the candidate DU. Unlike in the first embodiment, the CU transmits information related to inter-cell L1/L2 mobility to the candidate DU different from the source DU. For example, if the CU determines the candidate DU, the CU transmits information related to inter-cell L1/L2 mobility to the candidate DU. The CU may transmit information related to inter-cell L1/L2 mobility to the source DU. The transmission of the information to the source DU is preferably performed when the source DU is a candidate DU.

The DU may determine the candidate cell. In this case, the CU transmits information related to inter-cell L1/L2 mobility to the candidate DU. Each candidate DU determines the candidate cell from the cells constituted by the DU itself. Preferably, each candidate DU transmits information related to the determined candidate cell to the CU.

Disclosed below are seven examples of information that may be included in the information related to inter-cell L1/L2 mobility disclosed in the first embodiment. These pieces of information may be combined with the information related to inter-cell L1/L2 mobility disclosed in the first embodiment.
(1) Instruction information of inter-cell L1/L2 mobility including between different DUs.
(2) Cancellation information of inter-cell L1/L2 mobility including between different DUs.
(3) Information indicating whether to execute inter-cell L1/L2 mobility including between different DUs.
(4) Information indicating whether different DUs are included in inter-cell L1/L2 mobility.
(5) Information for requesting DU to determine candidate cell.
(6) Information related to candidate DU.
(7) Combinations of (1) to (6).

Item (1) instruction information may be information for designation instruction of the candidate DU. Item (2) cancellation information may be information for designation cancellation of the candidate DU.

Disclosed below are six candidates as examples of item (6) information related to candidate DU.
(6-1) Information related to DU that is candidate.
(6-2) Information related to candidate cell.
(6-3) Information as to whether cell of another DU is included as candidate cell.
(6-4) Information related to DU constituting candidate cell.
(6-5) Information in which candidate cell is associated with each candidate DU.
(6-6) Combinations of (6-1) to (6-5).

Item (6-4) information related to DU constituting candidate cell may be included in the information related to the candidate cell.

Disclosed below are five examples of information related to DU.
(A) Identifier of DU.
(B) Setting of DU.
(C) Information related to interface between DU and CU.
(D) UE identifier used between DU and CU.
(E) Combinations of (A) to (D).

Item (A) may be the candidate DU identifier to be described later. The identifier of the DU may include the identifier of the gNB constituting the DU. It is possible to identify which base station constitutes the DU. The identifier of the DU may not include the identifier of the gNB constituting the DU. The amount of information can be reduced.

Item (C) information related to interface between DU and CU may be, for example, GTP TEID.

By receiving such information, the DU can recognize itself as the candidate DU of the inter-cell L1/L2 mobility including between different DUs. The DU configures setting as the candidate DU using the received information.

The CU transmits information related to inter-cell L1/L2 mobility to the DU. The information may include information indicating the inter-cell L1/L2 mobility including between different DUs. The information may include information related to inter-cell L1/L2 mobility that the CU transmits to the candidate DU. The source DU may be included in the candidate DU. The information related to the source DU may be included as the information related to the candidate DU. Inter-cell L1/L2 mobility in the source DU can be performed. The information related to the candidate DU may be limited to the information related to the source DU. The amount of information transmitted from the CU to the source DU can be reduced.

The identifier of the candidate DU may be provided. Hereinafter, the identifier of the candidate DU may be referred to as the candidate DU identifier. The candidate DU identifier may be used in each protocol of RRC, RLC, MAC, and PHY. For example, the candidate DU identifier is used in the MAC. For example, the candidate DU identifier may be used as an identifier for identifying the candidate DU in the MAC CE. For example, the candidate DU identifier is used in the PHY. For example, the candidate DU identifier may be used as an identifier for identifying the candidate cell in the DCI. In this way, it is possible to identify the candidate DU in each protocol. In this way, the candidate DU can be identified in each protocol.

The candidate cell identifier may be set so as not to overlap for each gNB. There is one candidate cell identifier between different DUs of the same gNB. Since candidate cells can be identified in the same gNB, for example, inter-cell L1/L2 mobility processing including between different DUs in the same gNB can be facilitated. The candidate cell identifier may be set so as not to overlap for each CU. There is one candidate cell identifier between different DUs of the same CU. Since candidate cells can be identified in the same CU, for example, inter-cell L1/L2 mobility processing including between different DUs in the same CU can be facilitated. The candidate cell identifier may be set so as not to overlap for each DU. The amount of information required for the candidate cell identifier can be reduced. As another method, the candidate cell identifiers may be set so as not to overlap each other within a predetermined range. The predetermined range is, for example, within a predetermined gNB group, within a predetermined CU group, within a predetermined DU group, within all candidate DUs, or the like.

Similarly, the candidate DU identifier may be set so as not to overlap for each gNB or may be set so as not to overlap for each CU. An effect similar to that of the above method of setting the candidate cell identifier can be obtained. As another method, the candidate DU identifiers may also be set so as not to overlap each other within a predetermined range. The predetermined range is, for example, within a predetermined gNB group, within a predetermined CU group, within a predetermined DU group, within all candidate DUs, or the like.

The first embodiment has disclosed the processing method of inter-cell L3 mobility when the inter-cell L1/L2 mobility is set. The processing method may differ between the case of inter-cell L1/L2 mobility (hereinafter referred to as intra-DU inter-cell L1/L2 mobility) processing performed within the same DU and the case of inter-cell L1/L2 mobility (hereinafter referred to as inter-DU inter-cell L1/L2 mobility) processing performed between different DUs. The processing method may be set. The priority order may differ between the case of intra-DU inter-cell L1/L2 mobility processing and the case of inter-DU inter-cell L1/L2 mobility processing. The priority order may be set. The setting information is transmitted from the CU to the DU and the UE. The setting information may be transmitted from the DU to the UE. The setting information may be included in the information related to inter-cell L1/L2 mobility. In this way, it is possible to flexibly set the priority order according to each processing. For example, in the case of intra-DU inter-cell L1/L2 mobility processing, priority may be given to inter-cell L1/L2 mobility processing, and in the case of inter-cell L1/L2 mobility processing including a cell change between different DUs, priority may be given to inter-cell L3 mobility. In the case of cell change within the DU, by giving priority to inter-cell L1/L2 mobility processing, mobility can be performed with a low delay, and the occurrence of communication interruption due to mobility can be reduced.

The first embodiment has disclosed that a new GTP-TEID may be used for communication between the CU and the DU after inter-cell L1/L2 mobility. Similarly, after inter-cell L1/L2 mobility including cell change between different DUs, a new GTP-TEID may be used for communication between the CU and the DU. Preferably, the methods disclosed in the first embodiment are appropriately applied.

The first embodiment has disclosed that a new UE identifier that is used in the F1 interface may be used after inter-cell L1/L2 mobility. Similarly, after inter-cell L1/L2 mobility including cell change between different DUs, a new UE identifier that is used in the F1 interface may be used. Preferably, the methods disclosed in the first embodiment are appropriately applied.

The first embodiment has disclosed the activation/deactivation of the candidate cell. In the inter-cell L1/L2 mobility processing including a cell change between different DUs, the candidate cell activation/deactivation method may be appropriately applied.

The gNB may set activation/deactivation (act/deact) of the candidate DU. The gNB notifies the UE of the act/deact of the candidate DU. The CU may configure the setting. Notification of the act/deact of the candidate DU is provided from the CU to the DU and from the DU to the UE. The notification may be included in the RRC message. F1 signaling may be used for notification from the CU to the DU. RRC signaling may be used for notification from the DU to the UE. The UE receives the PDCCH of the candidate cell of the activated candidate DU. The UE may perform L1 measurement on the candidate cell of the activated candidate DU. In this way, the candidate DU setting and the act/deact of the candidate DU can be separately performed. For example, the CU transmits, to the UE, the act/deact of the candidate DU after transmitting the candidate DU setting. The UE performs only the setting of the candidate DU through candidate setting, and performs the PDCCH reception of the candidate cell of the candidate DU upon receiving act. Upon receiving deact, the PDCCH reception of the candidate cell of the candidate DU is not performed. In this way, power saving of the UE can be achieved.

The DU may set the act/deact of the candidate DU. Notification of the act/deact of the candidate DU is provided from the DU to the UE. The notification may be transmitted by MAC signaling. For example, the notification may be included in the MAC CE and transmitted. This enables early transmission. The act/deact of the candidate DU may be transmitted by L1/L2 signaling. The item may be included in the DCI and transmitted. The item may be included in the PDCCH and transmitted. This enables earlier transmission. The above-described effect can be obtained. In addition, since the act/deact of the candidate DU can be provided as notification early, dynamic control can be performed. The UE can receive the PDCCH of the candidate cell of the target candidate DU early. The TCI state (TCI-State) from the candidate cell of the target candidate DU can be received early. Therefore, inter-cell L1/L2 mobility can be executed with a lower delay.

The act/deact setting of the candidate DU may be included in the information related to inter-cell L1/L2 mobility from the CU to the DU or from the DU to the UE and transmitted. The act/deact setting may be transmitted together with the information related to the candidate DU or by being included in the information related to the candidate DU. In this way, it is possible to control whether the setting of the candidate DU is set to act or deact. Flexible setting of the candidate DU is possible.

A default act/deact setting may be determined for the candidate DU. The default act/deact setting may be statically determined by a standard or the like. Preferably, the default setting is applied if the act/deact setting is not sent. For example, when only the setting of the candidate DU is received, the candidate DU is set to deact. Alternatively, the candidate DU may be set to act. When the act/deact setting is received, the setting is followed. In this way, the amount of information signaled can be reduced. In addition, the act/deact processing of the candidate DU can be simplified.

When the candidate DU is activated, all the candidate cells of the candidate DU may be activated. When the candidate DU is deactivated, all the candidate cells of the candidate DU may be deactivated. The acr/deact setting for each candidate cell may not be configured. The amount of information of signaling in the act/deact processing can be reduced.

A problem in the inter-cell L1/L2 mobility processing including a cell change between different DUs is which DU the L1 measurement result by the UE should be reported to. A method for reporting the L1 measurement result by the UE in the inter-cell L1/L2 mobility processing including a cell change between different DUs will be disclosed. The method for reporting the L1 measurement result by the UE disclosed in the first embodiment may be appropriately applied. For example, the UE may perform transmission to the candidate DU constituting the candidate cell to which the L1 measurement result is transmitted. For example, the UE may perform transmission to the candidate DU constituting the PUCCH candidate cell to which the L1 measurement result is transmitted.

Disclosed below are other methods. The UE transmits the L1 measurement results of all candidate cells to the source DU. Preferably, the L1 measurement results are transmitted to the cell of the source DU. The cell may be the source cell. The cell may be the PCell. The cell may be the PUCCH candidate cell. The cell may be the PSCell. The cell may be the PUCCH SCell.

Disclosed below are other methods. The UE transmits the L1 measurement results of all candidate cells to a DU other than the source DU. Preferably, the L1 measurement results are transmitted to the cell of a DU other than the source DU. The cell may be the candidate cell. The cell may be the PCell. The cell may be the PUCCH candidate cell. The cell may be the PSCell. The cell may be the PUCCH SCell.

Disclosed below are other methods. The UE transmits the L1 measurement results of all candidate cells to all candidate DUs. The L1 measurement results may be transmitted to the cells of all candidate DUs. The cell may be the candidate cell. The cell may be the PCell. The cell may be the PUCCH candidate cell. The cell may be the PSCell. The cell may be the PUCCH SCell.

Disclosed below are other methods. The UE transmits the L1 measurement results of all candidate cells to the DU with the best reception quality result. The L1 measurement results may be transmitted to the cell of the DU with the best reception quality result. The L1 measurement results may be transmitted to the DU having a beam with the best reception quality result. The L1 measurement results may be transmitted to the cell having a beam with the best reception quality result. The cell may be the candidate cell. The cell may be the PCell. The cell may be the PUCCH candidate cell. The cell may be the PSCell. The cell may be the PUCCH SCell.

Disclosed below are other methods. The UE transmits the L1 measurement result of the candidate cell of each candidate DU to the measured candidate DU. The L1 measurement result is transmitted to the cell of the measured candidate DU. The cell may be the candidate cell. The cell may be the PCell. The cell may be the PUCCH candidate cell. The cell may be the PSCell. The cell may be the PUCCH SCell.

Disclosed below are other methods. The UE may transmit the L1 measurement result of the candidate cell of each candidate DU to a DU different from the measured candidate DU. The L1 measurement result may be transmitted to the cell of a DU different from the measured candidate DU. For example, the L1 measurement result may be transmitted to the DU having a beam with the best reception quality result. For example, the L1 measurement result may be transmitted to the cell having a beam with the best reception quality result. The cell may be the candidate cell. The cell may be the PCell. The cell may be the PUCCH candidate cell. The cell may be the PSCell. The cell may be the PUCCH SCell.

Disclosed below are other methods. The UE may transmit the L1 measurement results of the candidate cells of some candidate DUs to the measured candidate DUs. The L1 measurement results may be transmitted to the cell of the measured candidate DU. The cell may be the candidate cell. The cell may be the PCell. The cell may be the PUCCH candidate cell. The cell may be the PSCell. The cell may be the PUCCH SCell.

The cell to which the UE transmits the L1 measurement result of the candidate cell may be a cell capable of uplink transmission.

The L1 measurement results may not be the L1 measurement results of all the candidate cells. L1 measurement results of some candidate cells may be used. L1 measurement results of a candidate cell having some candidate beams may be used. For example, L1 measurement results of the top n candidate cells may be used. For example, L1 measurement results of a candidate cell having the top n candidate beams may be used. L1 measurement results of the top n candidate beams may be used. For example, L1 measurement results of a candidate cell exceeding a predetermined threshold may be used. For example, L1 measurement results of a candidate cell having a candidate beam exceeding a predetermined threshold may be used. L1 measurement results of a candidate beam exceeding the predetermined threshold may be used. For example, a predetermined number of L1 measurement results from the top among the L1 measurement results exceeding the predetermined threshold may be used. The predetermined number of L1 measurement results may be, for example, the number of candidate DUs. For example, L1 measurement results of a candidate beam with the best L1 measurement result may be used from among the candidate DUs.

A method for sharing the L1 measurement result received from the UE with the source DU and/or each candidate DU will be disclosed. The L1 measurement result transmitted to the source DU and/or each candidate DU may be provided as notification to another source DU and/or each candidate DU. The notification may be made via the CU. Alternatively, the UE preferably transmits the same L1 measurement result to the source DU and/or each candidate DU. In this way, each DU can make the same determination in changing the cell. Each DU can recognize that the cell change by the inter-cell L1/L2 mobility has been determined. Each DU can recognize the cell after the cell change by the inter-cell L1/L2 mobility. Since both the source DU and the target DU can receive the same L1 measurement result, even when one DU determines the cell change by the inter-cell L1/L2 mobility, the other DU can also recognize that the cell change has been determined.

The first embodiment has disclosed a method in which a gNB determines a candidate cell for the inter-cell L1/L2 mobility destination (target cell of inter-cell L1/L2 mobility) of the UE. Preferably, the method disclosed in the first embodiment is appropriately applied to the determination of the target cell of the inter-cell L1/L2 mobility including a cell change between different DUs. The gNB may be the DU. The DU may be the source DU. The DU may be the target DU.

A method in which the source DU determines the target cell that is a candidate cell for the inter-cell L1/L2 mobility destination will be disclosed in further detail. The source DU determines the target cell. Preferably, the determination is made using the L1 measurement result from the UE disclosed above. For example, the determination is made using L1 measurement results of all candidate cells. For example, for the determination, the L1 measurement results transmitted by the UE with the above-disclosed method of transmitting the L1 measurement results of all candidate cells to the source cell may be used. The source DU notifies the CU that a cell change has been determined by the inter-cell L1/L2 mobility including a cell change between different DUs. The source DU may transmit information related to the cell change to the CU. Preferably, the information related to the cell change disclosed in the first embodiment is appropriately applied. As a method for notification of the information from the source DU to the CU, preferably, the method disclosed in the first embodiment is appropriately applied. The source DU may transmit some or all of the information related to the cell change to the UE. Preferably, the methods disclosed in the first embodiment are appropriately applied.

By transmitting the information from the source DU to the CU, the CU may perform DL transmission switching from the source DU to the target DU using the received information. The CU may stop the DL transmission to the source DU using the received information. Communication with the UE can be switched from the source DU to the target DU. After switching the DL transmission from the source DU to the target DU, the CU may transmit the release of the inter-cell L1/L2 mobility processing including a cell change between different DUs to the source DU. The CU may transmit the release of the candidate cell to the source DU. F1 signaling may be used for the transmission. An existing message may be used. For example, UE CONTEXT RELEASE may be used. In this way, the source DU can recognize that the transmission destination of the DL for the UE by the CU has been switched from the source DU to the target DU.

The CU may notify the target DU that the cell has been changed to the cell constituted by the target DU due to the inter-cell L1/L2 mobility including a cell change between different DUs. The CU may transmit some or all of the information related to the cell change to the target DU. In this way, the target DU can recognize that the candidate cell constituted by the DU itself has been changed to the target cell by the inter-cell L1/L2 mobility including a cell change between different DUs.

A method in which the target DU determines a candidate cell (target cell) for the inter-cell L1/L2 mobility destination will be disclosed in further detail. The target DU determines the target cell. Preferably, the determination is made using the L1 measurement result from the UE disclosed above. For example, the determination is made using L1 measurement results of all candidate cells. For example, for the determination, the L1 measurement results transmitted by the UE with the above-disclosed method of transmitting the L1 measurement results of all candidate cells to a DU other than the source DU may be used. For example, for the determination, the L1 measurement result transmitted by the UE with the method of transmitting the same L1 measurement result to all the candidate DUs may be used. The target DU notifies the CU that a cell change has been determined by the inter-cell L1/L2 mobility including a cell change between different DUs. The target DU may transmit information related to the cell change to the CU. Preferably, the information related to the cell change disclosed in the first embodiment is appropriately applied. As a method for notification of the information from the target DU to the CU, preferably, the method disclosed in the first embodiment is appropriately applied. The target DU may transmit some or all of the information related to the cell change to the UE. Preferably, the methods disclosed in the first embodiment are appropriately applied.

By transmitting the information from the target DU to the CU, the CU may perform DL transmission switching from the source DU to the target DU using the received information. The CU may stop the DL transmission to the source DU using the received information. Communication with the UE can be switched from the source DU to the target DU. After switching the DL transmission from the source DU to the target DU, the CU may transmit the release of the inter-cell L1/L2 mobility processing including a cell change between different DUs to the source DU. The CU may transmit the release of the candidate cell to the source DU. F1 signaling may be used for the transmission. An existing message may be used. For example, UE CONTEXT RELEASE may be used. In this way, the source DU can recognize that the transmission destination of the DL for the UE by the CU has been switched from the source DU to the target DU.

The CU may notify the source DU that the cell has been changed to the target cell constituted by the target DU due to the inter-cell L1/L2 mobility including a cell change between different DUs. The CU may transmit some or all of the information related to the cell change to the source DU. In this way, the source DU can recognize the target DU and/or the target cell by the inter-cell L1/L2 mobility including a cell change between different DUs.

Another method for determining a candidate cell (target cell) for the inter-cell L1/L2 mobility destination including a cell change between different DUs will be disclosed. The UE determines a cell change by the inter-cell L1/L2 mobility. The UE determines the target cell of the inter-cell L1/L2 mobility. The inter-cell L1/L2 mobility may be the inter-cell L1/L2 mobility including a cell change between different DUs. The UE determines the target beam of the target cell on which L1/L2 mobility is performed. For example, the determination may be made in MAC. The UE may determine the target cell and/or the target beam by using the L1 measurement result of the candidate cell. The determination by the UE enables early determination of the target cell and/or the target beam after the L1 measurement for inter-cell L1/L2 mobility is performed. Inter-cell L1/L2 mobility can be executed with a low delay.

The UE may notify the target cell of a request for cell change by the inter-cell L1/L2 mobility. The UE may notify the target DU of a request for cell change by the inter-cell L1/L2 mobility. The request may include information indicating a cell change request as information included in the request for cell change by the inter-cell L1/L2 mobility. Some or all of the information related to the cell change disclosed in the first embodiment may be applied as the information included in the request for cell change by the inter-cell L1/L2 mobility. The target cell or the target DU that has received the information can recognize that the cell after the inter-cell L1/L2 mobility has been changed to the target cell. The target cell or the target DU that has received the information may configure setting as the target cell or the target DU.

Preferably, RRC signaling is used for notification of the request for cell change from the UE to the target cell or the target DU. A new RRC message may be provided for the notification, or an existing RRC message may be used. For example, the RRCReconfigurationcomplete message may be used. MAC signaling may be used as another method for notification of the request for cell change from the UE to the target cell or the target DU. For example, the notification may be included in the MAC CE. This enables early notification. As another method, the notification may be included in the L1/L2 signaling. For example, the notification may be included in the UCI and transmitted on the PUCCH or the PUSCH. For example, the notification may be transmitted on the PUCCH or PUSCH together with the CSI or by being included in the CSI. This enables earlier dynamic transmission.

The L1 measurement result may be transmitted from the UE to the DU. Preferably, the method for reporting the L1 measurement result from the UE disclosed above is used. For example, a method in which the UE transmits the L1 measurement result to a DU other than the source DU may be used. The UE may transmit the L1 measurement result to the target cell. The UE may transmit the L1 measurement result to the target DU constituting the target cell.

The UE may make the request for cell change by the inter-cell L1/L2 mobility by transmitting the L1 measurement result to the target cell. The request for cell change may be transmitted by being included in the L1 measurement result, or together with the L1 measurement result. The candidate cell that has received the L1 measurement result may determine the cell itself as the change destination cell (target cell). The candidate DU constituting the candidate cell that has received the L1 measurement result may determine the DU itself as the change destination DU (target DU). For example, the L1 measurement results may be the measurement results of all candidate cells. For example, the L1 measurement results may be the measurement results of only some cells. For example, the L1 measurement results may be the measurement results of only the target cell. For example, the L1 measurement results may be the measurement results of only the source cell and the target cell. For example, the L1 measurement results may be the measurement results of the candidate cell constituted by the target DU. In this way, the target DU can recognize the L1 measurement result in the UE.

The target DU notifies the CU that the cell change by the inter-cell L1/L2 mobility has been determined. The target DU may transmit information related to the cell change to the CU. The CU may perform DL transmission switching from the source DU to the target DU using the received information. The CU may stop the DL transmission to the source DU using the received information. Preferably, the methods disclosed above are appropriately applied. A similar effect can be obtained.

It has been disclosed that the CU may notify the target DU or the source DU that the cell has been changed to the target DU and/or the target cell by the inter-cell L1/L2 mobility including a cell change between different DUs. The CU may notify another candidate DU that the cell has been changed to the target DU and/or the target cell by the inter-cell L1/L2 mobility including a cell change between different DUs. The other candidate DU can recognize the target DU and/or the target cell by the inter-cell L1/L2 mobility including a cell change between different DUs.

The CU may notify some or all of the candidate DUs other than the target DU of the release of the setting of the candidate DU of the inter-cell L1/L2 mobility including a cell change between different DUs. The release of the settings of some or all candidate cells constituted by the candidate DU may be provided as notification. The information indicating the release may be included in the information related to inter-cell L1/L2 mobility and transmitted. For example, inter-cell L1/L2 mobility cancellation information may be used as the information indicating the release. The candidate DU that has received the information indicating the release releases the setting of the candidate cell.

For the notification of the release, the notification of cell change by the inter-cell L1/L2 mobility including a cell change between different DUs disclosed above may be used. The other candidate DU can cancel the setting of the candidate DU after the inter-cell L1/L2 mobility including a cell change between different DUs.

In this way, the candidate DU does not need to maintain the setting of the inter-cell L1/L2 mobility processing including a cell change between different DUs. It is possible to reduce the load and resources in the DU.

The CU may notify a candidate DU other than the target DU of the change of the candidate cell. Preferably, the notification includes information related to the candidate cell to be changed. The information indicating the change of the candidate cell may be included in the information related to inter-cell L1/L2 mobility. For example, information indicating the change setting of the inter-cell L1/L2 mobility may be provided and included in the information related to inter-cell L1/L2 mobility. For example, information indicating the change of the candidate cell may be included in the information related to the candidate cell. Preferably, the candidate DU that has received the change changes the setting of the candidate cell.

Processing of RLC, MAC, and PHY protocols in the DU and the UE after the inter-cell L1/L2 mobility including a cell change between different DUs will be disclosed. After the inter-cell L1/L2 mobility including a cell change between different DUs, there is no need to reset the RLC. The reconfiguration of the RLC may be unnecessary. The release of the RLC may be unnecessary. Preferably, the target DU uses the RLC setting after the inter-cell L1/L2 mobility. Preferably, the target DU applies the RLC setting received from the CU. The RLC setting may be included in the setting of the candidate cell. The setting may be included in the information related to inter-cell L1/L2 mobility. Preferably, the UE uses the RLC setting after the inter-cell L1/L2 mobility. Preferably, the UE applies the RLC setting received from the CU. The RLC setting may be included in the setting of the candidate cell. The setting may be included in the information related to inter-cell L1/L2 mobility. Flexible setting is possible before and after mobility.

After the inter-cell L1/L2 mobility including a cell change between different DUs, the setting of the RLC may be the same as that of the source DU. After the inter-cell L1/L2 mobility including a cell change between different DUs, the setting of the RLC of the source DU may be continued. The CU transmits the RLC setting of the source DU to the target DU. The source DU may transmit the RLC setting of the source DU to the target DU through the CU. Preferably, the target DU uses the RLC setting received from the CU. The RLC setting may be included in the setting of the candidate cell. The setting may be included in the information related to the source DU. The setting may be included in the information related to inter-cell L1/L2 mobility. After the inter-cell L1/L2 mobility including a cell change between different DUs, the UE may continue the RLC setting of the source DU. Preferably, the UE applies the RLC setting received from the CU. The RLC setting may be included in the setting of the candidate cell. The setting may be included in the information related to inter-cell L1/L2 mobility. Flexible setting is possible before and after mobility.

In this way, the time required for the RLC setting processing can be reduced.

After the inter-cell L1/L2 mobility including a cell change between different DUs, there is no need to reset the MAC. The reconfiguration of the MAC may be unnecessary. The release of the MAC may be unnecessary. Preferably, the target DU uses the MAC setting after the inter-cell L1/L2 mobility. Preferably, the target DU applies the MAC setting received from the CU. The MAC setting may be included in the setting of the candidate cell. The setting may be included in the information related to inter-cell L1/L2 mobility. Preferably, the UE uses the MAC setting after the inter-cell L1/L2 mobility. Preferably, the UE applies the MAC setting received from the CU. The MAC setting may be included in the setting of the candidate cell. The setting may be included in the information related to inter-cell L1/L2 mobility. Flexible setting is possible before and after mobility.

After the inter-cell L1/L2 mobility including a cell change between different DUs, the setting of the MAC may be the same as that of the source DU. After the inter-cell L1/L2 mobility including a cell change between different DUs, the setting of the MAC of the source DU may be continued. The CU transmits the MAC setting of the source DU to the target DU. The source DU may transmit the MAC setting of the source DU to the target DU through the CU. Preferably, the target DU uses the MAC setting received from the CU. The MAC setting may be included in the setting of the candidate cell. The setting may be included in the information related to the source DU. The setting may be included in the information related to inter-cell L1/L2 mobility. After the inter-cell L1/L2 mobility including a cell change between different DUs, the UE may continue the setting of the MAC of the source DU. Preferably, the UE applies the MAC setting received from the CU. The MAC setting may be included in the setting of the candidate cell. The setting may be included in the information related to inter-cell L1/L2 mobility. Flexible setting is possible before and after mobility.

In this way, the time required for the MAC setting processing can be reduced.

After the inter-cell L1/L2 mobility including a cell change between different DUs, there is no need to reset the PHY. The reconfiguration of the PHY may be unnecessary. The release of the PHY may be unnecessary. Preferably, the target DU uses the PHY setting after the inter-cell L1/L2 mobility. Preferably, the target DU applies the PHY setting received from the CU. The PHY setting may be included in the setting of the candidate cell. The setting may be included in the information related to inter-cell L1/L2 mobility. Preferably, the UE uses the PHY setting after the inter-cell L1/L2 mobility. Preferably, the UE applies the PHY setting received from the CU. The PHY setting may be included in the setting of the candidate cell. The setting may be included in the information related to inter-cell L1/L2 mobility. Flexible setting is possible before and after mobility.

After the inter-cell L1/L2 mobility including a cell change between different DUs, the setting of the PHY may be the same as that of the source DU. After the inter-cell L1/L2 mobility including a cell change between different DUs, the setting of the PHY of the source DU may be continued. The CU transmits the PHY setting of the source DU to the target DU. The source DU may transmit the PHY setting of the source DU to the target DU through the CU. Preferably, the target DU uses the PHY setting received from the CU. The PHY setting may be included in the setting of the candidate cell. The setting may be included in the information related to the source DU. The setting may be included in the information related to inter-cell L1/L2 mobility. After the inter-cell L1/L2 mobility including a cell change between different DUs, the UE may continue the setting of the PHY of the source DU. Preferably, the UE applies the PHY setting received from the CU. The PHY setting may be included in the setting of the candidate cell. The setting may be included in the information related to inter-cell L1/L2 mobility. Flexible setting is possible before and after mobility.

In this way, the time required for the PHY setting processing can be reduced.

Preferably, the method disclosed in the first embodiment is appropriately applied to the processing of the PDCP protocol in the CU and the UE after the inter-cell L1/L2 mobility including a cell change between different DUs. A similar effect can be obtained.

The protocol processing disclosed above may be applied for each bearer type. For example, the protocol processing is applied to both the DRB and the SRB. For example, the protocol processing may be applied to the DRB and not applied to the SRB. For example, the protocol processing may be applied to the SRB and not applied to the DRB. For example, the protocol processing may be applied to the SRB0 and the SRB1 among the SRBs, and not applied to the other SRBs. Flexible control can be performed according to the type of bearer.

In the inter-cell L1/L2 mobility including a cell change between different DUs, the bearer may not be changed. In this way, it is possible to avoid complication of inter-cell mobility control.

After the cell change by the inter-cell L1/L2 mobility including a cell change between different DUs, the gNB transmits the TCI-state information to the UE. The gNB transmits the TCI-state information of the target cell to the UE from the source DU. The TCI-state information may be transmitted from the source cell of the source DU. Alternatively, the gNB transmits the TCI-state information of the target cell from the target DU to the UE. The TCI-state information may be transmitted from the target cell of the target DU. As a method for transmitting the TCI-state information, preferably, the method disclosed in the first embodiment is appropriately applied.

The candidate cell identifier given to the candidate cell may be transmitted together with the TCI-state information or by being included in the TCI-state information. The candidate cell identifier of the target cell may be transmitted. The candidate DU identifier given to the candidate DU may be transmitted together with the TCI-state information or by being included in the TCI-state information. The candidate DU identifier of the target DU may be transmitted. The candidate cell identifier may be associated with the candidate DU identifier of the candidate DU constituting the candidate cell.

The candidate cell identifier and/or the candidate DU identifier may be transmitted together with the TCI-state information transmitted by the MAC CE or by being included in the TCI-state information. The candidate DU identifier and/or the candidate cell identifier may be transmitted together with the TCI-state information transmitted by the DCI or by being included in the TCI-state information. The carrier identifier of the candidate cell may be transmitted together with the TCI-state information transmitted by the DCI or by being included in the TCI-state information. In this way, even when the candidate DU identifier and/or the candidate cell identifier are allocated, it is possible to notify the UE of the target DU and/or the target cell after the cell change by the inter-cell L1/L2 mobility including a cell change between different DUs.

So far, the method in which the CU that has received the information related to the cell change from the source DU or the target DU performs the DL transmission switching from the source DU to the target DU has been disclosed. Another method will be disclosed regarding DL transmission from the CU to the DU in the inter-cell L1/L2 mobility processing including a cell change between different DUs.

The CU transmits information related to transmission data to the candidate DU constituting the candidate cell. The information may be transmitted to all the candidate DUs. Alternatively, the information may be transmitted to some candidate DUs. For example, the information may be transmitted to the candidate DU constituting the candidate cell with good reception quality. For example, candidate cells with good reception quality may be a predetermined number of candidate cells with higher reception quality. The information related to transmission data may be transmitted before the cell is changed by the inter-cell L1/L2 mobility. As another method, the information related to transmission data may be transmitted before the data forwarding is performed or together with the data forwarding.

Disclosed below are five examples of information related to transmission data.
(1) Information related to last DL data successfully transmitted.
(2) Information related to DL data not successfully transmitted.
(3) Information related to first DL data not successfully transmitted.
(4) Information related to DL data for which data forwarding is started.
(5) Combinations of (1) to (4).

The information related to transmission data may be PDCP Sequence Number (SN). The information related to transmission data may be SN Status. The information related to transmission data may be Downlink Data Delivery Status. Item (2) information related to DL data not successfully transmitted may be the number of pieces from item (3) first DL data not successfully transmitted.

The information related to transmission data may be RLC Sequence Number (SN). For example, when the source DU and the target DU have similar RLC settings, both DUs can share and recognize the RLC SN. As the information related to transmission data, PDCP Sequence Number (SN) and RLC SN may be combined. The information related to transmission data may be information related to the association between PDCP SN and RLC SN. The information related to the association between PDCP SN and RLC SN may be transmitted from the source DU to the target DU through the CU. In this way, transmission data processing by the DU constituting the RLC can be facilitated.

The information related to transmission data may be updated. The CU may transmit the information related to the updated transmission data to the candidate DU. For example, the information may be periodically updated. The CU may periodically transmit the information to the candidate DU. The period may be determined by the CU. For example, the determination may be made by using communication quality, the frequency at which data transmission fails, or the like. For example, when the number of failures is small, the period may be long, and when the number of failures is large, the period may be short. It is possible to update information related to transmission data according to the radio wave propagation environment. It is possible to make the amount of data to be subjected to data forwarding more suitable according to the radio wave propagation environment.

The CU performs data forwarding on the candidate DU constituting the candidate cell. The data forwarding may be performed on all the candidate DUs. Alternatively, the data forwarding may be performed on some candidate DUs. For example, the data forwarding may be performed on the candidate DU constituting the candidate cell with good reception quality. For example, candidate cells with good reception quality may be a predetermined number of candidate cells with higher reception quality. The candidate DU for which the data forwarding is performed may be the candidate DU to which the information related to transmission data has been transmitted. The data forwarding may be started before the cell is changed by the inter-cell L1/L2 mobility.

A data forwarding method will be disclosed. The CU performs data forwarding from the first data not successfully transmitted. The CU may perform data data forwarding on the data not successfully transmitted and the data after the transmission of the information related to transmission data. In this way, the CU can transmit the data not transmitted in the source DU to the candidate DU. The candidate DU can receive the data not transmitted in the source DU.

The candidate DU that has become the target DU due to the inter-cell L1/L2 mobility preferably transmits, to the UE, the data after the start of the data forwarding. The data not transmitted in the source DU can be transmitted to the UE. The inter-cell L1/L2 mobility processing including a cell change between different DUs can be executed without losing data.

Another method for data forwarding from the CU to the DU will be disclosed. The CU duplicates the data to be transmitted to the source DU, and transmits the data to the candidate DU constituting the candidate cell. The CU may perform data forwarding of the duplicated data to all the candidate DUs. Alternatively, the data forwarding may be performed on some candidate DUs. For example, the data forwarding may be performed on the candidate DU constituting the candidate cell with good reception quality. For example, candidate cells with good reception quality may be a predetermined number of candidate cells with higher reception quality. The candidate DU for which the data forwarding is performed may be the candidate DU to which the information related to transmission data has been transmitted. The data forwarding of the duplicated data may be started before the cell is changed by the inter-cell L1/L2 mobility.

A data duplication method will be disclosed. Data replication may be performed on the PDCP of the CU. The data to be transmitted to the source DU may be duplicated and the same PDCP SN may be added. The same Robust Header Compression (ROHC) processing as the data to be transmitted to the source DU is preferably performed. The same cipher processing as the data to be transmitted to the source DU is preferably performed. All of these may be the same. In the inter-cell L1/L2 mobility processing including a cell change between different DUs in one CU, PDCP is the same before and after mobility. Therefore, the data to be transmitted to the source DU and the duplicated data to be transmitted to the candidate DU can have not only the same PDCP SN but also the same ROHC and cipher. Consequently, the candidate DU can receive the same data as the source DU from the CU. Regardless of which candidate DU becomes the target DU, the DL data can be immediately transmitted to the UE.

The candidate DU that has become the target DU due to the inter-cell L1/L2 mobility may transmit the data not transmitted in the source DU to the UE. For the transmission, information related to transmission data received from the CU disclosed above may be used. The inter-cell L1/L2 mobility processing including a cell change between different DUs can be executed without losing data.

In this manner, by forwarding the duplicated data to the candidate DU, the data forwarding can be executed early. For example, the data forwarding can be performed on the candidate DU even in a situation in which the target DU is not yet determined. The target DU can transmit the data, which has been subjected to the data forwarding in advance, to the UE early. It is possible to reduce the delay time of inter-cell L1/L2 mobility and the data transmission interruption time.

A trigger for data forwarding from the CU to the candidate DU will be disclosed. The CU may start the data forwarding upon receiving the notification of the cell change from the source DU or the target DU. For example, once the CU receives, from the source DU or the target DU, ACCESS SUCCESS for the notification of the cell change by the inter-cell L1/L2 mobility, data forwarding may be started. The data forwarding can be performed after the cell change by the inter-cell L1/L2 mobility is reliably performed.

Disclosed below are other methods. The CU may start the data forwarding upon transmitting an instruction for the inter-cell L1/L2 mobility setting including a cell change between different DUs from the CU to the candidate DU. The CU may start the data forwarding upon transmitting information related to the candidate cell to the candidate DU. The CU may start the data forwarding upon transmitting UE CONTEXT MODIFICATION REQUEST including the information to the candidate DU. The data forwarding can be started early for the candidate DU.

Disclosed below are other methods. The CU may start the data forwarding upon receiving a positive response to the instruction for the inter-cell L1/L2 mobility setting including a cell change between different DUs from the candidate DU. The CU may start the data forwarding upon receiving a positive response to the setting of the candidate cell from the candidate DU. The CU may start the data forwarding upon receiving a positive response to UE CONTEXT MODIFICATION REQUEST including the information from the candidate DU. If the CU receives a reject response to the UE CONTEXT MODIFICATION REQUEST including the information from the candidate DU, the data forwarding is not performed. The data forwarding can be started early for the candidate DU for which the candidate cell has been set.

Disclosed below are other methods. The CU may start the data forwarding upon transmitting the L1 measurement setting of the candidate cell to the candidate DU. The L1 measurement setting may be CSI-MeasConfig. Since it is not necessary for the UE to forward the data before the L1 measurement is started, it is possible to reduce the amount of data to be forwarded.

Disclosed below are other methods. The CU may start the data forwarding upon receiving the information related to transmission data from the source DU. Upon occurrence of data having a transmission failure in the source DU, the data forwarding may be started. Data that cannot be transmitted in the source DU can be forwarded to the candidate DU. The candidate DU serving as the target DU can perform transmission to the UE from the data that cannot be transmitted in the source DU. In addition, if the transmission to the UE is successful in the source DU, there is no need to perform the data forwarding, so that the amount of data to be forwarded can be reduced.

Also in such a method, the above-disclosed method in which the source DU or the target DU notifies the CU that the cell change has been determined by the inter-cell L1/L2 mobility including a cell change between different DUs may be appropriately applied. The CU may perform DL transmission switching from the source DU to the target DU using the received information. The CU may stop the DL transmission to the source DU using the received information. In this way, it is possible to avoid an increase in processing load and an increase in power consumption due to useless DL transmission.

Although the method in which the CU transmits the information related to transmission data to the candidate DU constituting the candidate cell has been disclosed, the information related to transmission data may be transmitted from the source DU to the CU. The CU may transmit the information related to transmission data received from the source DU to the candidate DU. The CU may determine the data to be forwarded by using the information related to transmission data received from the source DU. For example, DL data not successfully transmitted in the source DU is forwarded to the candidate DU. Preferably, the candidate DU that has become the target DU transmits the DL data to the UE. In this way, the data forwarding according to the DL transmission situation in the source DU can be performed.

The CU may notify the source DU of the release of the UE CONTEXT. The source DU that has received the release releases the UE CONTEXT. The CU may notify the source DU of the release of the setting of the candidate cell. The source DU that has received the release releases the setting of the candidate cell. In this way, the source DU can release the UE CONTEXT and the setting of the candidate cell. The CU may notify the source DU of the change of the setting of the candidate cell. Preferably, the source DU that has received the change changes the setting of the candidate cell. The source DU can change the setting of the candidate cell.

Preferably, the method disclosed in the first embodiment is appropriately applied to the processing in cases where CA or DC is set for the UE to be subjected to the inter-cell L1/L2 mobility including a cell change between DUs. A similar effect can be obtained. For example, the method may be applied to a case where the serving cell is set by cells constituted by different DUs. For example, the method may also be applied to a case where the target DU after the inter-cell L1/L2 mobility including a cell change between DUs is not the DU constituting the serving cell before the mobility. For example, the serving cell constituted by a DU different from the target DU may be released. For example, a DU that cannot set the cell of a different DU as the serving cell may be a candidate DU, and the DU may be a target DU.

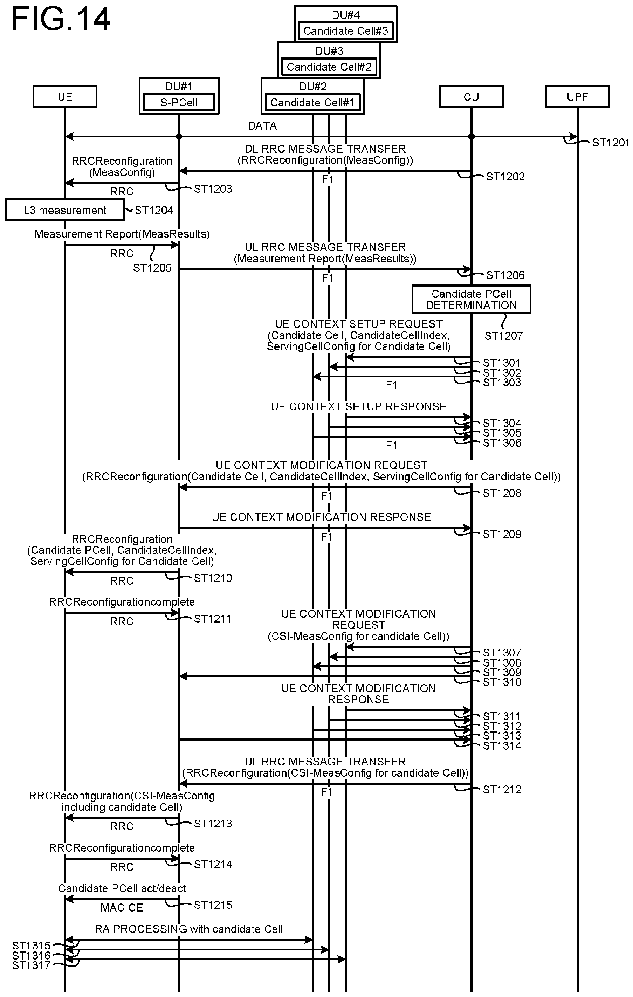

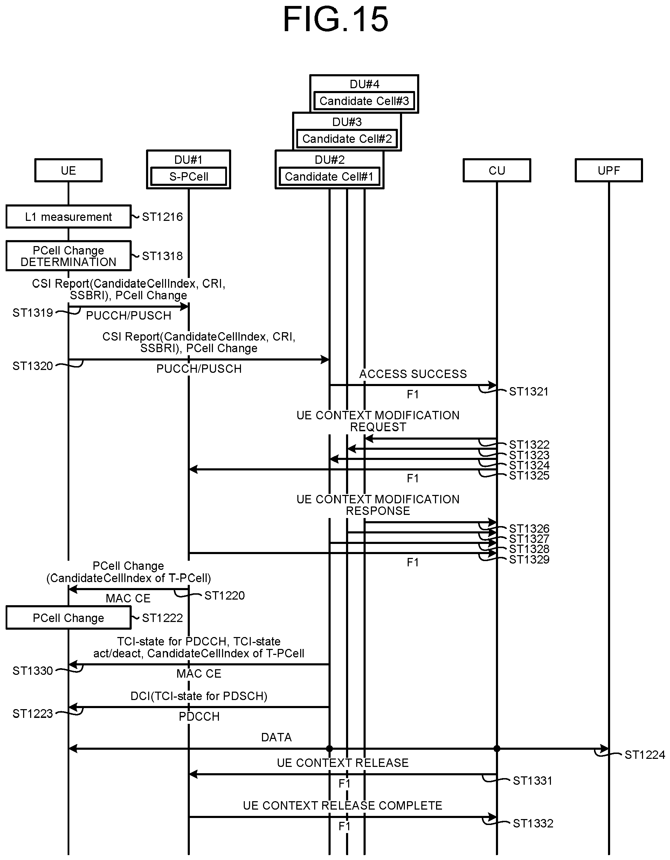

FIGS. 14 and 15 are sequence diagrams illustrating an example of an inter-cell L1/L2 mobility processing method including a cell change between different DUs according to the second embodiment. FIG. 14 illustrates the first half of the sequence, and FIG. 15 illustrates the second half of the sequence. Steps identical to those in FIGS. 12 and 13 are denoted by the same step numbers, and descriptions already provided are omitted. The example in FIGS. 14 and 15 discloses a case where the UE determines the cell change.

In step ST1207, the CU determines a candidate cell for inter-cell L1/L2 mobility. At this time, the CU may determine a cell constituted by a DU different from the DU constituting the source cell as the candidate cell. In the example illustrated in FIG. 14, three cells constituted by DU#2, DU#3, and DU#4 are determined as candidate cells (Candidate Cell #1, Candidate Cell #2, and Candidate Cell #3). In steps ST1301 to ST1303, the CU transmits information related to inter-cell L1/L2 mobility to candidate DUs (DU#2, DU#3, and DU#4) constituting the candidate cells. The CU may transmit information related to inter-cell L1/L2 mobility to the source DU (DU#1).

Each candidate DU that has received the information related to inter-cell L1/L2 mobility configures the setting of the candidate DU. In steps ST1304 to ST1306, each candidate DU notifies the CU of a response to the inter-cell L1/L2 mobility processing setting instruction. The response may include notification of the completion of the inter-cell L1/L2 mobility processing setting. Whether the inter-cell L1/L2 mobility processing setting is allowed may be included in the response. Preferably, each candidate DU transmits a positive response when the setting is allowed. When the setting is not allowed, a rejection response is preferably transmitted. Reason information may be included in the rejection response. In this way, the CU can recognize whether the setting of the candidate cell has been configured in each candidate DU.

In step ST1208, the CU notifies DU#1 of information instructing the UE to execute the inter-cell L1/L2 mobility processing including a cell change between different DUs. Preferably, information related to inter-cell L1/L2 mobility is transmitted. Preferably, the information related to inter-cell L1/L2 mobility includes, for example, the identifier of the target UE, the candidate cell identifier to be allocated to the determined candidate cell, the setting of the candidate cell, the identifier of the candidate DU constituting the candidate cell, and the like. For the setting of the candidate cell, for example, information of ServingCellConfig that is used in the RRC message may be used. Consequently, DU#1 can start the inter-cell L1/L2 mobility processing including a cell change between different DUs for the UE.

In step ST1210, DU#1 notifies the UE of information instructing the UE to execute the inter-cell L1/L2 mobility processing including a cell change between different DUs from the source cell. Preferably, information related to inter-cell L1/L2 mobility is transmitted. Preferably, the information related to inter-cell L1/L2 mobility includes, for example, the candidate cell identifier to be allocated to the determined candidate cell, the setting of the candidate cell, the identifier of the candidate DU constituting the candidate cell, and the like. For the setting of the candidate cell, for example, information of ServingCellConfig that is used in the RRC message may be used. Consequently, the UE can start the L1/L2 mobility processing between cells including between different DUs.

In steps ST1307 to ST1310, the CU transmits the L1 measurement setting for the inter-cell L1/L2 mobility of the candidate cell to the candidate DU. In the example illustrated in FIG. 14, DU#1 that is the source DU is also determined as the candidate DU. That is, DU#1 is the source DU and also the candidate DU. As another method, step ST1310 may be omitted. In step ST1212, the L1 measurement setting of the candidate cell may be transmitted to the source DU. Information of CSI-MeasConfig that is used in the RRC message may be used for the setting. Preferably, F1 signaling is used for the notification. For example, UE CONTEXT MODIFICATION REQUEST message may be used. In steps ST1311 to ST1314, each candidate DU notifies the CU whether the L1 measurement setting for the inter-cell L1/L2 mobility of the candidate cell has been completed. Preferably, F1 signaling is used for the notification. For example, UE CONTEXT MODIFICATION RESPONSE may be used.

Similarly to the method disclosed in the first embodiment, the transmission of the L1 measurement setting for the inter-cell L1/L2 mobility of the candidate cell may be included in the notification of the information instructing the UE to execute the inter-cell L1/L2 mobility processing. For example, the setting of L1 measurement for the inter-cell L1/L2 mobility of the candidate cell may be included in steps ST1301 to ST1303 and ST12101. In addition, step ST1208 may include the information of step ST1212. In addition, step ST1210 may include the information of step ST1213. A combination with the method of omitting step ST1310 described above may be used. In this way, signaling in steps ST1307 to ST1314 and steps ST1211 to ST1214 can be reduced. The delay time of the inter-cell L1/L2 mobility processing can be reduced.

In step ST1212, the CU transmits the L1 measurement setting for the inter-cell L1/L2 mobility of all the candidate cells to DU#1. Information of CSI-MeasConfig that is used in the RRC message may be used. In step ST1213, the source cell of DU#1 transmits, to the UE, the L1 measurement setting for the inter-cell L1/L2 mobility of all the candidate cells. In this way, the UE can recognize the L1 measurement setting for the inter-cell L1/L2 mobility of the candidate cell.

In steps ST1315 to ST1317, the UE may perform synchronization processing with the candidate cell of the candidate DU. The RA processing may be executed for the synchronization processing. Preferably, the uplink synchronization is performed by the RA processing, and the TA information is received from each candidate cell. In this way, synchronization between the UE and the candidate cell is possible. By performing this processing before executing the L1 measurement for the inter-cell L1/L2 mobility of the UE, it is possible to shorten the time to the start of communication with the target cell after executing the L1 measurement for the inter-cell L1/L2 mobility. As another method, the synchronization processing between the UE and the candidate cell may be performed after the cell change determination. The synchronization may be performed with only the target cell instead of all candidate cells or activated candidate cells. Processing of the UE can be facilitated. Power consumption of the UE can be reduced.

In step ST1216, the UE performs L1 measurement on the candidate cell of the activated candidate DU.

In step ST1318, the UE determines the cell change by using the L1 measurement result of the candidate cell. The UE that has determined the cell change transmits the L1 measurement result for inter-cell L1/L2 mobility to the source cell and the target cell in steps ST1319 and ST1320. Preferably, the L1 measurement result includes information related to the target cell after the cell change determination and the cell change. The L1 measurement result may include information related to the source cell. The L1 measurement result may include information related to the DU. For example, information related to the DU constituting the target cell may be included. For example, information related to the DU constituting the source cell may be included. The information related to the DU may be the identifier of the DU. In this way, the source cell and the target cell can recognize that the cell change to the target cell has been determined.

In step ST1321, the target DU (DU#2) constituting the target cell that has recognized that it has become the target cell by the cell change notifies the CU that the cell change has been determined by the inter-cell L1/L2 mobility. The target DU may transmit information related to the cell change to the CU. Consequently, the CU can recognize that the cell change of the target DU to the target cell has been determined. These notifications may be transmitted from the source DU (DU#1) constituting the source cell to the CU.

In steps ST1322 to ST1325, the CU may notify each candidate DU that the cell has been changed to the target DU and/or the target cell by the inter-cell L1/L2 mobility including a cell change between different DUs. The other candidate DU that has not been determined as the target DU can recognize the target DU and/or the target by the inter-cell L1/L2 mobility including a cell change between different DUs. The notification may include information of setting cancellation of the candidate cell. Consequently, the other candidate DU can cancel the setting of the candidate DU. The source DU may be included as the other candidate DU. The target DU may be included as the other candidate DU.

In steps ST1326 to ST1329, the other candidate cell notifies the CU of a response to the cell change notification. In a case where the cell change notification includes information of setting cancellation of the candidate cell, the response may include information as to whether the setting cancellation of the candidate cell has been completed. Consequently, the CU can recognize whether the candidate DU has canceled the setting of the candidate cell.

The source DU that has received the cell change of the UE in step ST1319 may notify the UE that the cell has been changed to the target cell in step ST1220 from the source cell. The candidate cell identifier of the target cell may be transmitted. The identifier of the target DU constituting the target cell may be transmitted.

In step ST1222, the UE changes the target cell.

The target DU that has received the cell change of the UE in step ST1320 transmits the candidate cell identifier of the target cell, the TCI-state information of the target cell, and the act/deact information of the TCI-state from the target cell to the UE in step ST1330. By transmitting the TCI-state information, the UE can recognize the beam that is used in the target cell.

In step ST1223, the target DU transmits scheduling information from the target cell by using the PDCCH. The UE receives the PDCCH of the target cell using the TCI-state received in step ST1330. In this way, the UE can receive the PDCCH of the beam of the target cell. The UE can acquire the scheduling information.

In step ST1224, the UE can perform data communication among the target cell of the target DU, the CU, and the UPF.

In this way, the L1 measurement for inter-cell L1/L2 mobility by the UE, the determination of the cell change, the report of the L1 measurement result for inter-cell L1/L2 mobility in steps ST1216 and ST1318 to ST1320, and the notification of the cell change, the cell change, the notification of the TCI-state information of the target cell, and the PDCCH transmission from the beam of the target cell in steps ST1220 to ST1223 including step ST1330 can be performed between the UE and the source DU and between the UE and the target DU. These can be performed only by the L1/L2 control. Therefore, inter-cell L1/L2 mobility including a cell change between different DUs can be executed early.

The processing in steps ST1321 to ST1329 described above may not be performed before the cell change of the inter-cell L1/L2 mobility. The processing may be performed after the cell change. The execution timing of the processing may be before or after notification of the TCI-state information to the UE. For example, the processing may be performed after step ST1330 or step ST1223. By reducing the load of the target DU, the cell change processing by the inter-cell L1/L2 mobility can be performed earlier.

If the target cell is not a cell constituted by the source DU, the CU may notify the source DU of the release of the UE CONTEXT in step ST1331. The source DU that has received the release releases the UE CONTEXT. In step ST1332, the source DU notifies the CU of the release completion of the UE CONTEXT. In this way, the UE context can be dismissed in the source DU. The storage capacity can be reduced in the source DU.

In the manner disclosed in the second embodiment, the inter-cell L1/L2 mobility processing including a cell change between different DUs becomes possible. Thus, it is possible to reduce the delay time and the communication interruption time when mobility processing occurs between cells including between different DUs. In the inter-cell mobility processing including between different DUs, the occurrence of connection failure with the target DU and the target cell can be reduced, and situations in which communication cannot be performed can be reduced.

In the present disclosure, the gNB may be the MCG or SCG. In the case of the SCG, preferably, the inter-cell L1/L2 mobility processing disclosed in each of the above embodiments is applied to the change of the PSCell. It is possible to reduce the delay time or the like of the change of the PSCell.

The methods disclosed in each of the above embodiments may be applied to IAB. Preferably, the above-disclosed CU is applied to the IAB donor CU, and the above-disclosed DU is applied to the IAB donor DU and/or IAB node. Inter-cell L1/L2 mobility processing within one IAB donor DU and/or IAB node and inter-cell L1/L2 mobility processing including a cell change between different IAB donor DUs and/or IAB nodes can be executed. In IAB, inter-cell mobility can be set to L1/L2 mobility, and the delay time or the like of inter-cell mobility can be reduced.

The methods disclosed in each of the above embodiments may be applied to SL communication. For example, the methods may be applied to communication between the UE and the NW via a relay. The methods may be applied to communication between the UE and the NW by the L2 relay. The above-described inter-cell L1/L2 mobility processing including, for example, a cell change between different DUs may be applied to mobility processing between relays to which the same gNB is connected. Preferably, the above-disclosed CU is applied to the gNB, and the above-disclosed DU is applied to the relay. Mobility between relays can be set to L1/L2 mobility, and the delay time or the like of mobility between relays can be reduced.

In the present disclosure, a part described as a gNB or a cell may be either a gNB or a cell unless otherwise specified.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

### Reference Signs List

202 communication terminal device (mobile terminal); 210 communication system; 213, 240-1, 240-2, 750 base station device (NR base station, base station); 214 5G core unit; 215 central unit; 216 distributed unit; 217 central unit for control plane; 218 central unit for user plane; 219 TRP; 301, 403 protocol processing unit; 302 application unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 526 control unit; 401 EPC communication unit; 402 other base station communication unit; 412 5GC communication unit; 521 Data Network communication unit; 522 base station communication unit; 523 user plane communication unit; 523-1 PDU processing unit; 523-2 mobility anchoring unit; 525 control plane control unit; 525-1 NAS security unit; 525-2 idle state mobility management unit; 527 session management unit; 527-1 PDU session control unit; 527-2 UE IP address allocating unit; 751-1 to 751-8 beam; 752 cell.

## Claims

1. A communication system comprising:
a base station to be applied to a fifth-generation wireless access system; and
a communication terminal to connect to the base station, wherein
when a cell that is a connection destination of a communication terminal in communication via any one of a plurality of cells constituted by the base station is changed,
the base station transmits, to the communication terminal, setting information for measuring communication quality in a physical layer of the cell,
the communication terminal measures the communication quality in another cell different from a cell being connected based on the setting information received from the base station, and transmits a measurement result to the base station, and
the base station determines a cell to be a new connection destination of the communication terminal based on the measurement result.

2. The communication system according to claim 1, wherein
the base station determines one or more candidate cells that are candidates for a cell to be a new connection destination of the communication terminal from among a plurality of cells constituted by the base station, and notifies the communication terminal of the candidate cells determined, and
the communication terminal measures the communication quality in the candidate cell.

3. The communication system according to claim 1 or 2, wherein
the base station includes a central unit and one or more distributed units,
the distributed units constitute one or more cells, and
the central unit determines a cell to be a new connection destination of the communication terminal.

4. The communication system according to claim 3, wherein
the central unit determines a cell for which the communication quality is to be measured, and transmits the setting information to the distributed unit constituting the cell determined and to the communication terminal.

5. A base station to be applied to a fifth-generation wireless access system, wherein
when a cell that is a connection destination of a communication terminal in communication via any one of a plurality of cells constituted by the base station is changed, the base station notifies the communication terminal of setting information for measuring communication quality in a physical layer of another cell different from a cell being connected, acquires a measurement result of the communication quality from the communication terminal, and determines a cell to be a new connection destination of the communication terminal based on the measurement result acquired.
